# EUROPEAN PATENT APPLICATION

(11) **EP 4 618 020 A1**
(43) Date of publication of application: **17.09.2025**
(21) Application number: 24305385.7
(22) Date of filing: 14.03.2024
(51) Int. Cl.: G06T 9/00, G06T 17/20, H04N 19/463

(54) **EFFICIENT EDGEBREAKER SPIRAL REVERSI IMPLEMENTATION WITH SIMPLIFIED DECODER PROCESSING**

(71) Applicant: InterDigital CE Patent Holdings, SAS, 75017 Paris (FR)
(72) Inventor: MARVIE, Jean-Eudes, 35830 BETTON (FR); MOCQUARD, Olivier, 35000 RENNES (FR)
(74) Representative: Vossius & Partner Patentanwälte Rechtsanwälte mbB

(57) **Abstract**

Systems and methods for reverse edgebreaker coding of triangular mesh information. A mesh decoding method according to some embodiments comprises: obtaining from a bitstream a CLERS table representing an edgebreaker encoding of a topology of a triangular mesh; reconstructing the topology of the triangular mesh using a reverse traversal of the CLERS table; creating a first ordered table of corners of the triangular mesh representing an order of corners traversed during the reverse traversal of the CLERS table; obtaining from the bitstream ordered attribute information representing attributes of respective faces or vertices in the triangular mesh; and reconstructing the attributes of the respective faces or vertices using the attribute information and a forward iteration over the first ordered table of corners.

## Description

### BACKGROUND

The present disclosure relates to systems and methods for encoding and decoding a mesh based on edgebreaker technology. Edgebreaker is a technology that is capable of efficiently coding the connectivity of a triangular mesh. In its most straightforward implementation, a mesh encoded using edgebreaker is represented by an ordered series made up of the symbols, C, L, E, R, and S, called the "CLERS" sequence. Generally speaking, starting with an initial triangle, these symbols describe different ways to attach a new triangle, providing information on whether or how different edges of the new triangle are connected to one or more of the existing triangles.

In systems using edgebreaker technology, information regarding the mesh, such as the topology of the mesh and, optionally, some or all attributes of the mesh, is sometimes stored in a data structure known as a corner table. Each triangle in the mesh has three corners, and each of those corners has an entry in the corner table. Each entry in the corner table may explicitly include information about a particular corner, such as the index of a vertex associated with the current corner (when multiple triangles share a vertex point, there are multiple corners associated with the same vertex), or information regarding an attribute of the corner (or an index of such an attribute). Moreover, additional information is conveyed implicitly by the corner table, for example an identifier of the triangle containing the current corner may be determined by dividing the corner identifier c by three, so that the triangle index is determined by INT(c/3). Additional attribute information may be stored in the corner table or in other tables.

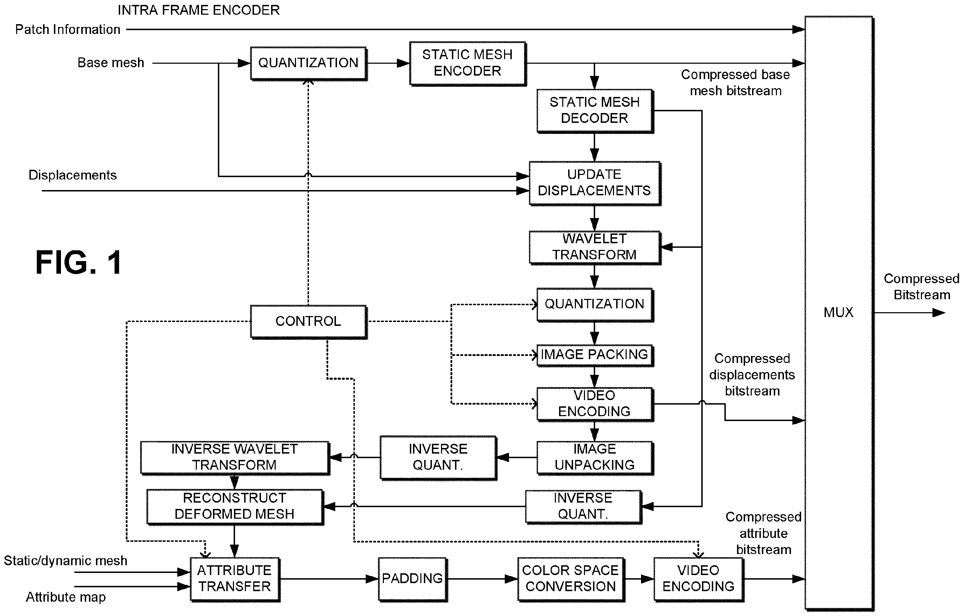

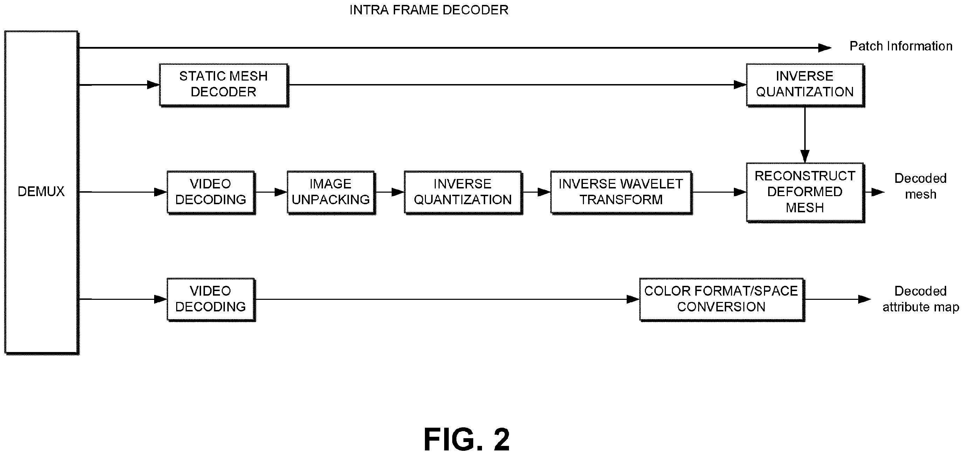

Following the MPEG V-Mesh (now renamed V-DMC) CfP the solution proposed by Apple was selected to become the foundation of the MPEG V-Mesh Test Model (TM). This proposal is described at K. Mammou, J. Kim, A. Tourapis and D. Podborski, "m59281 - [V-CG] Apple's Dynamic Mesh Coding CfP Response," Apple Inc, 2022. An overview of mesh encoding and decoding are illustrated in FIGs. 1 and 2, respectively. FIG. 1 illustrates an MPEG TM Intra frame encoding process. FIG. 2 illustrates an MPEG TM Intra frame decoding process. The test model, for some frames, uses a static mesh coder for the encoding of a base mesh that is then subdivided to obtain an approximation of the original mesh.

Until v3.0, the V-Mesh test model encoded the base mesh using the Google Draco implementation of the state-of-the-art mesh encoder named Edgebreaker, and more specifically its Spiral Reversi variant which they adapted to work on a Corner Table (CT). Edgebreaker is described in, for example, J. Rossignac, "Edgebreaker: Connectivity compression for triangle meshes," GVU center, Georgia Institute of Technology, 1999 ("Rossignac (1999)"); and J. Rossignac, "3D compression made simple: Edgebreaker with ZipandWrap on a corner-table," in Proceedings International Conference on Shape Modeling and Applications, Genova, Italy, 2001 ("Rossignac (2001)"). The spirale reversi variant is described in M. Isenburg and J. Snoeyink, "Spirale Reversi: Reverse decoding of the Edgebreaker encoding," Computational Geometry, vol. 20, pp. 39-52, 2001 ("Isenburg & Snoeyink (2001)").

Note that Rossignac (1999) originally decodes in a forward manner and operates on a Half Edge representation of the mesh. Later, Rossignac (1999) proposed a modified version, still decoding forward but running on a Corner Table representation of the mesh, which leads to a very compact algorithm. Spirale Reversi, described by Isenburg & Snoeyink (2001), proposes an extension of Rossignac (1999), still running on a Half Edge representation, but performing the decoding in a reverse manner, which leads to a decoding on O(n) in one pass which is a better performance than Rossignac (1999) (worst case time complexity of O(n²)) and Rossignac (2001) (O(n) but multi pass).

For the standardization of V-DMC is desirable to provide an MPEG alternative implementation of the edgebreaker that could be used in the test model reference software and extended/specified as needed. InterDigital handled the task of crafting the first version of the software. The version that was adopted for the TM v3.0 is detailed in the following MPEG contributions: J.-E. Marvie and O. Mocquard, "m62603 - [V-DMC][EE4.4] Edgebreaker base mesh codec integration," MPEG meeting 142, Antalya, 2023; and J.-E. Marvie and O. Mocquard, "m63344 -[V-DMC][EE4.4]-an-efficient-Edgebreaker-implementation," MPEG meeting 142, Antalya. This software is further described in European Patent Application No. 23305505.2, filed 6 April 2023. In that application, we presented the specific adaptations of the forward edge breaker, working on a corner table that were made to support the V-Mesh TM requirements as well as the associated bitstream syntax. Further extensions are described in the following European Patent Applications:
- European Patent Application No. 23305941.9, filed 14 June 2023 (describing the coding of per-face attributes).
- European Patent Application No. 23306154.8, filed 7 July 2023 (describing alternative vertex traversals).
- European Patent Application No. 23306155.5, filed 7 July 2023 (describing prediction-degree based motion estimation).
- European Patent Application No. 23306292.6, filed 26 July 2023 (describing per-face attribute optimization).
- European Patent Application No. 24305005.1, filed 2 January 2024 (describing a spirale reversi implementation).

For some meshes, especially the large ones with regular topology (vertex valence average of 6 neighbors), some specific extensions (known as valence driven encoding) can be used to better encode the CLERS table, such as those described in A. Szymczak, "Optimized Edgebreaker encoding for large and regular triangle meshes.," The Visual Computer, vol. 19, pp. 271-278, 2003. However, this solution only works with the reverse version of the EdgeBreaker. A first version of the reverse version is presented in Isenburg & Snoeyink (2001), which works on a half edge data structure. Later a version working on a corner table data structure, and supporting surfaces with holes and handles, was presented in T. Lewiner, H. Lopes, J. Rossignac and A. W. Vieira, "Efficient Edgebreaker for Surfaces of Arbitrary Topology," in Proceedings. 17th Brazilian Symposium on Computer Graphics and Image Processing, 2004 ("Lewiner et al. (2004)").

### SUMMARY

A mesh decoding method according to some embodiments comprises: obtaining from a bitstream a CLERS table representing an edgebreaker encoding of a topology of a triangular mesh; reconstructing the topology of the triangular mesh using a reverse traversal of the CLERS table; creating a first ordered table of corners of the triangular mesh representing an order of corners traversed during the reverse traversal of the CLERS table; obtaining from the bitstream ordered attribute information representing attributes of respective faces or vertices in the triangular mesh; and reconstructing the attributes of the respective faces or vertices using the attribute information and a forward iteration over the first ordered table of corners.

A mesh encoding method according to some embodiments comprises: using edgebreaker encoding, creating a CLERS table representing a geometry of a triangular mesh; creating a first ordered table of corners of the triangular mesh representing an order of corners traversed during the creation of the CLERS table; creating ordered attribute information representing attributes of respective faces or vertices in the triangular mesh, the ordered attribute information being created using a reverse iteration over the first ordered table of corners; and encoding the CLERS table and the attribute table in a bitstream.

An apparatus according to some embodiments comprises at least one processor and a computer-readable medium storing instructions for performing any of the methods described herein.

A computer-readable medium according to some embodiments store instructions for performing any of the methods described herein.

A computer-readable medium according to some embodiments stores a mesh encoded according to any of the methods described herein.

A signal according to some embodiments conveys a mesh encoded according to any of the methods described herein.

### BRIEF DESCRIPTION OF THE DRAWINGS

FIG. 1 is a flow diagram illustrating an overview of an MPEG Test Model Intra frame encoding process.
FIG. 2 is a flow diagram illustrating an overview of an MPEG Test Model Intra frame decoding process.
FIG. 3 is a flow diagram illustrating an example of a complete edgebreaker mesh codec. The top row is the encoding line, and the bottom row is the decoding line.
FIG. 4 illustrates example source code for an encoding procedure according to an example embodiment.
FIG. 5 illustrates example source code for a decoding procedure according to an example embodiment.
FIG. 6 illustrates example source code for a topology encoding procedure according to an example embodiment.
FIG. 7 illustrates the procedure compressComponent according to an example embodiment.
FIG. 8 illustrates the procedure writeBoundary, which goes through the boundary of _b (a corner given as parameter) and writes each vertex once in order.
FIG. 9 illustrates the procedure checkHandle according to an example embodiment.
FIG. 10 illustrates the procedure writeVertex according to an example embodiment.
FIG. 11 illustrates the procedure topoPrepass according to an example embodiment.
FIG. 12 illustrates the procedure spiraleReversi according to an example embodiment.
FIG. 13 illustrates the procedure readBoundary according to an example embodiment.
FIG. 14 illustrates the procedure closeStar according to an example embodiment.
FIG. 15 illustrates the procedure readVertex according to an example embodiment.
FIG. 16 illustrates the procedure postReindex according to an example embodiment.
FIG. 17 illustrates the procedure encodeAttributesWithMainlndexTable according to an example embodiment.
FIG. 18 illustrates the procedure encodeAttributesWithPrediction according to an example embodiment.
FIG. 19 illustrates the procedure encodeAttributesWithAuxiliarylndexTable according to an example embodiment.
FIG. 20 illustrates the AUX_UV_ENCODE statement to be copied in FIG. 19 according to an example embodiment.
FIG. 21 illustrates a first part of the procedure posEncodeWithPrediction according to an example embodiment.
FIG. 22 illustrates a second part of the procedure posEncodeWithPrediction according to an example embodiment.
FIG. 23 illustrates a first part of the procedure uvEncodeWithPrediction according to an example embodiment.
FIG. 24 illustrates a second part of the procedure uvEncodeWithPrediction according to an example embodiment.
FIG. 25 illustrates a procedure predictUV for encoding according to an example embodiment.
FIG. 26 illustrates a procedure decodeAttributesWithMainlndexTable according to an example embodiment.
FIG. 27 illustrates a procedure decodeAttributesWithPredition according to an example embodiment.
FIG. 28 illustrates a first part of a procedure decodeAttributesWithAuxiliarylndexTable according to an example embodiment.
FIG. 29 illustrates a second part of the procedure decodeAttributesWithAuxiliarylndexTable according to an example embodiment.
FIG. 30 illustrates a third part of the procedure decodeAttributesWithAuxiliarylndexTable according to an example embodiment.
FIG. 31 illustrates an AUX_UV_DECODE statement to be copied in FIG. 30 according to an example embodiment.
FIG. 32 illustrates a first part of the procedure posDecodeWithPredictions according to an example embodiment.
FIG. 33 illustrates a second part of the procedure posDecodeWithPredictions according to an example embodiment.
FIG. 34 illustrates a first part of the procedure uvDecodeWithPrediction according to an example embodiment.
FIG. 35 illustrates a second part of the procedure uvDecodeWithPrediction according to an example embodiment.
FIG. 36 illustrates a procedure predictUV for decoding according to an example embodiment.
FIG. 37 illustrates a first part of the procedure encodePerFaceAttributes according to an example embodiment.
FIG. 38 illustrates a second part of the procedure encodePerFaceAttributes according to an example embodiment.
FIG. 39 illustrates a first part of the procedure decodePerFaceAttributes according to an example embodiment.
FIG. 40 illustrates a second part of the procedure decodePerFaceAttributes according to an example embodiment.
FIG. 41 illustrates a procedure applylndexDeduplicatePerFan used for per fan deduplications according to some embodiments according to an example embodiment.
FIG. 42 illustrates code used in delta coding of a handles table in a serialize method according to an example embodiment.
FIG. 43 illustrates code used in delta coding of a handles table in an unserialize method according to an example embodiment.
FIG. 44 illustrates modification to a serialize method, particularly to portions related to duplicates, as implemented in some embodiments.
FIG. 45 illustrates modification to an unserialize method, particularly to portions related to duplicates, as implemented in some embodiments.
FIG. 46 illustrates modification to an unserialize method, particularly to portions related to arithmetic decoding of duplicates, as implemented in some embodiments.
FIG. 47 is a block diagram of an example of a system in which various aspects and embodiments are implemented.

### DETAILED DESCRIPTION

The present disclosure describes an implementation of the reverse version of edgebreaker coding, including adaptations done to make it work for all the sequences of the V-Mesh CTC. In addition to encoding/decoding the topology of a mesh, the present disclosure also describes apparatus and methods for attribute prediction and arithmetic coding. This reverse version provides compression performance results on MPEC CTCs up to 6% better than the forward version with faster encoding/decoding runtimes. Compared to previous implementations of reverse edgebreaker coding, embodiments described herein feature changes in the direction of consumption of some tables by the encoder and decoder. These changes help to simplify the decoding process becomes and further improve memory coherency and caching by the decoder.

Some embodiments used topology encoding and decoding techniques as described in Lewiner et al. (2004). In such embodiments, there is no need to handle virtual points and table restarts. This allows for simplification of several functional blocks of the system such as: attribute predictions, post-reindexing, alternative vertex traversals, adaptation of per face attributes extensions, and support for vertex deduplication.

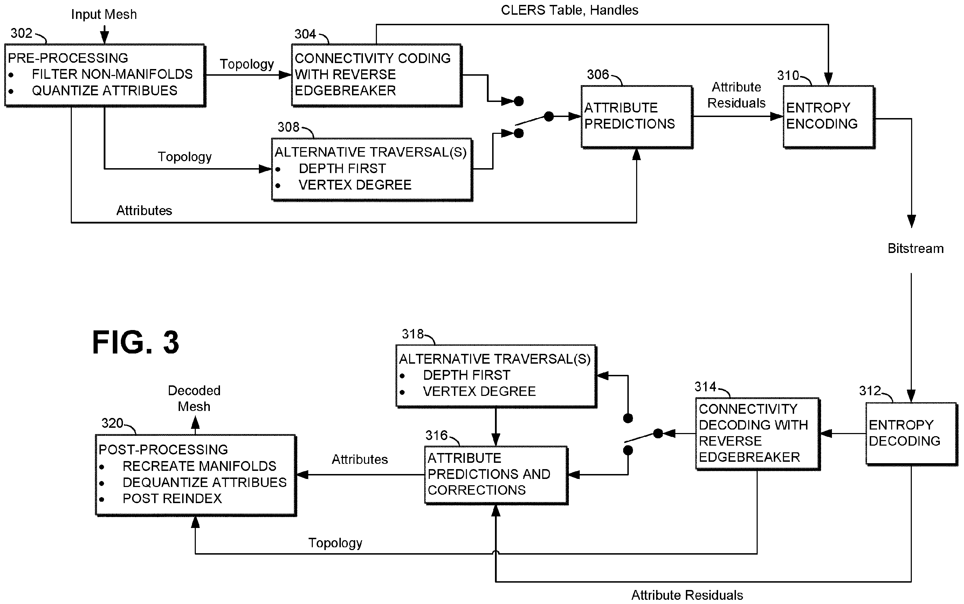

The flow diagram of FIG. 3 provides an overview of an edgebreaker mesh codec according to some embodiments. The top row is the encoding line, and the bottom row is the decoding line. Example commented source code for the different functional blocks is provided below. Example modifications to the V3C syntax are further provided below. As illustrated in FIG. 3, an example edgebreaker encoder performs pre-processing 302 of a mesh, e.g. to accommodate non-manifold surfaces or to quantize attributes. At 304, the encoder performs connectivity coding using edgebreaker to generate a CLERS table representing the connectivity. At 306, the encoder performs prediction of attributes of the mesh. The prediction may proceed in a topology-based order determined by the edgebreaker encoding. Alternatively, the prediction may proceed using a different order, such as a depth-first traversal or a vertex-degree-based traversal. At 308, the alternate traversal is performed. The encoder may signal in the bitstream information indicating which type of traversal is used for attribute prediction. The encoder may test different traversal types (e.g. a topology-based traversal type and one or more alternative traversal types) and encode the mesh using whichever traversal type provides the best performance (e.g. the greatest compression). At 310, entropy coding is performed of the CLERS table, of other information (e.g. handle information) about the topology of the mesh, and/or of the attribute residuals. A bitstream including this entropy encoded information may be stored for later use or may be transmitted to an encoder without intermediate storage.

At 312, a decoder performs entropy decoding on a received bitstream, including entropy decoding as appropriate of a CLERS table, handle information, and/or attribute residual information. At 314, the decoder uses the CLERS table and related information to reconstruct the topology or connectivity of the mesh. At 316, the decoder performs attribute prediction and corrections using the appropriate traversal type corresponding to the traversal type used by the encoder (which may be signaled in the bitstream). Where the traversal type is an alternative traversal type, the decoder performs the appropriate alternative traversal at 318. Where the traversal type is based on the topology of the mesh as reconstructed in 314, an alternative traversal is not needed. At 320, post-processing is performed, e.g. to recreate manifold structures, dequantize attributes, and perform post-indexing.

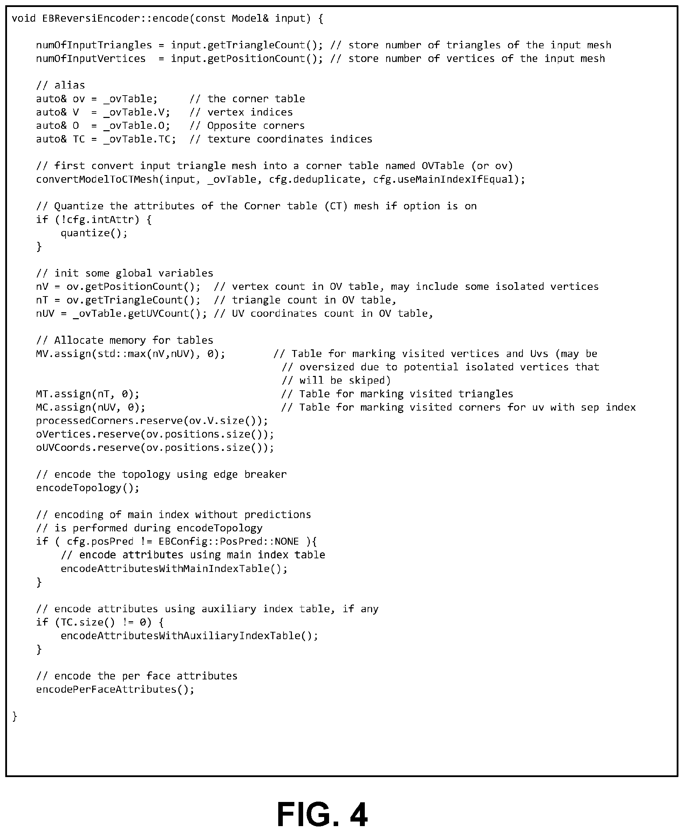

Example source code for an encoding high level procedure encode is depicted in FIG. 4. It performs the pre-processing, the connectivity coding, and the attributes prediction. The entropy coding and the encoding following the V3C syntax is performed afterward in method named serialize, relevant parts of which are described below.

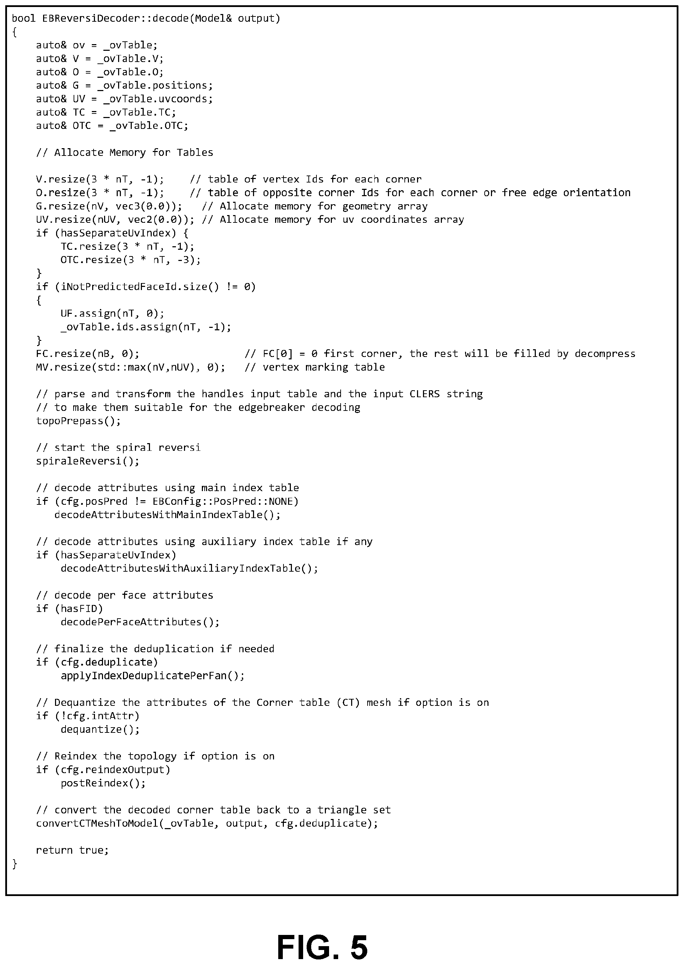

Example code for a decoding high-level procedure decode is depicted in FIG. 5. Following the parsing of the bitstream and the arithmetic decoding (that are executed by a method unserialize that is partially presented), it performs the decoding of the connectivity (procedures topoPrepass and spiraleReversi), of the attributes and the optional post-processing.

In these two high level procedures, the addition and removal of virtual points (a.k.a. dummy points), used in some implementations to handle holes in the surface, are not needed anymore and hence are removed.

Example embodiments implement topology coding and decoding techniques as described in Lewiner et al. (2004). Example implementations are provided below for encoding and decoding.

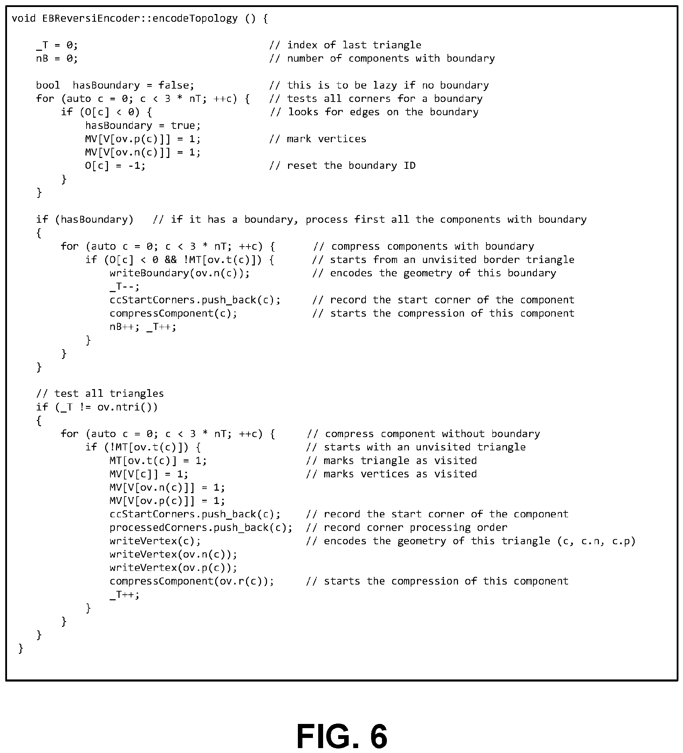

The procedure encodetopology (see FIG. 6) is the entry point for the topology encoding part. As shown in FIG. 6, example embodiments store the information ccStartCorners and processedcorners. Those are used later to perform the traversals for attributes predictions and post reindex. Example embodiments also encode some UV coordinates for which the complete pass on positions has been performed previously. Some example embodiments thus encode all the attributes in successive ordered passes after the topology encoding. (The same order may be used for decoding.) An example order is as follows:
1. Encoding of topology.
2. Encoding of position attributes (defines main index table).
3. Optionally encoding of UV attributes using main index table,
4. Or optionally encoding of UV attributes using auxiliary index table.
5. Optional encoding of per face attributes.

Passes that follow the topology order use the table processedcorners. Otherwise, the order may be reconstructed using the table ccstartcorners (which stores the first corner of each connected component - CC) and a predefined traversal method, such as one or more of the vertex traversal methods described in European Patent Application No. 23306154.8.

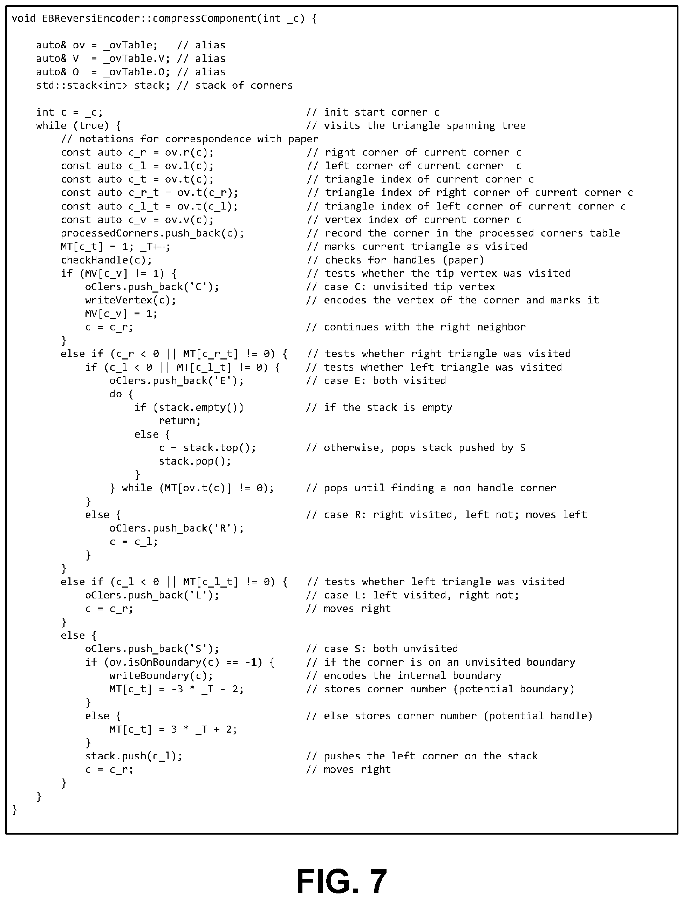

The procedure encodetopology first encodes all the connected components (CCs) with boundaries and then all the connected components without boundaries. For each connected component it invokes the procedure compresscomponent (see FIG. 7) with the start corner as parameter. This procedure goes through all the triangles of the connected component using the edge breaker spiraling method and generates the CLERS symbols that are written at the end of the oClers table of symbols. In this embodiment, the component start corners are kept in memory but will not need to be written in the bitstream. The procedure encodetopology is differeent from that of Lewiner et al. (2004) by storing the processed corners while moving over the triangles of the connected component.

For each connected component with boundary, the procedure encodetopology first encodes the first boundary of the connected component (by calling procedure writeboundary(ov.n(c))) before invoking the procedure compressComponent that will encode the other boundaries of the connected component, if any, by calling the procedure writeBoundary(c) when encountered during triangles traversal one some 'S' cases.

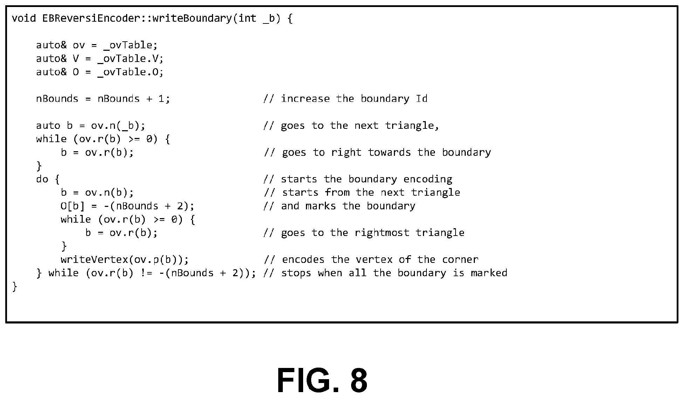

In the procedure writeBoundary, shown in FIG. 8, differs from a corresponding procedure disclosed in Lewiner et al. (2004) in that, for each new boundary, a unique Id is generated between -3 and -infinite. Each opposite corner of the boundary corner is marked with this Id. Note that -1 and -2 are reserved values for other purposes in this embodiment, this is why we start at -3.

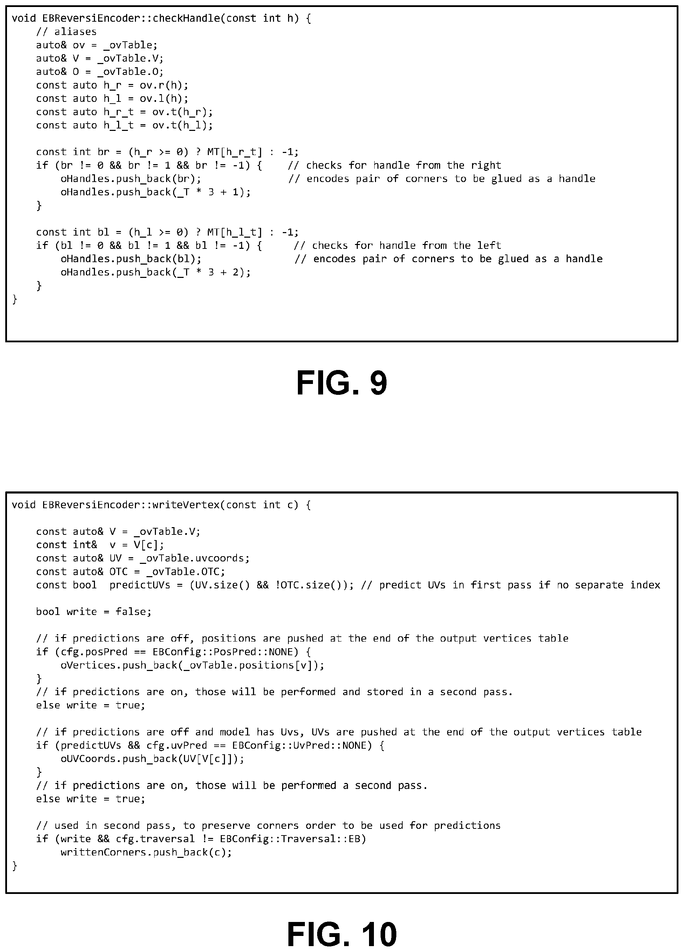

As for the topologic handles, the holes (boundaries) are marked using handles (pairs of integers to reconnect faces). Boundaries source corners are stored as negative integers (staring from -3). Some additional precautions are taken when storing the corners Ids into the handle tables. The checkHandle procedure of the present disclosure differs from that of from Lewiner et al. (2004) as depicted by FIG. 9. In the new following statement:
if (br != 0 && br != 1 && br != -1)
br == -1 means right corner is not valid, br == 1 means right triangle is visited but not on 'S' symbol and br == 0 means right triangle is not yet visited. In each of those case we do not want to store in the handle table. The corresponding test is done for left corners.

The procedure writevertex stores vertex attributes for further predictions. In example embodiments, if the predictions option is off for attributes, we directly store those in the table for AC coding. Otherwise, we append the corner Id given as a parameter at the end the table writtencorners that is used later when using topology traversal for the predictions of the attributes. In the case of alternative traversals, such as prediction degree or depth traversals, there is no need to push the Id and the writevertex procedure does not perform anything.

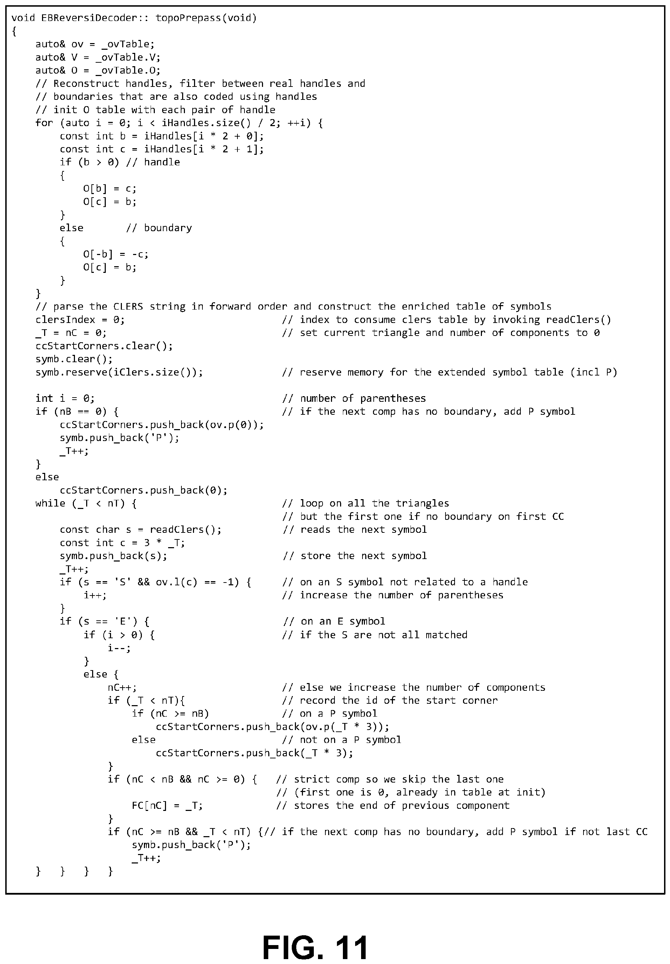

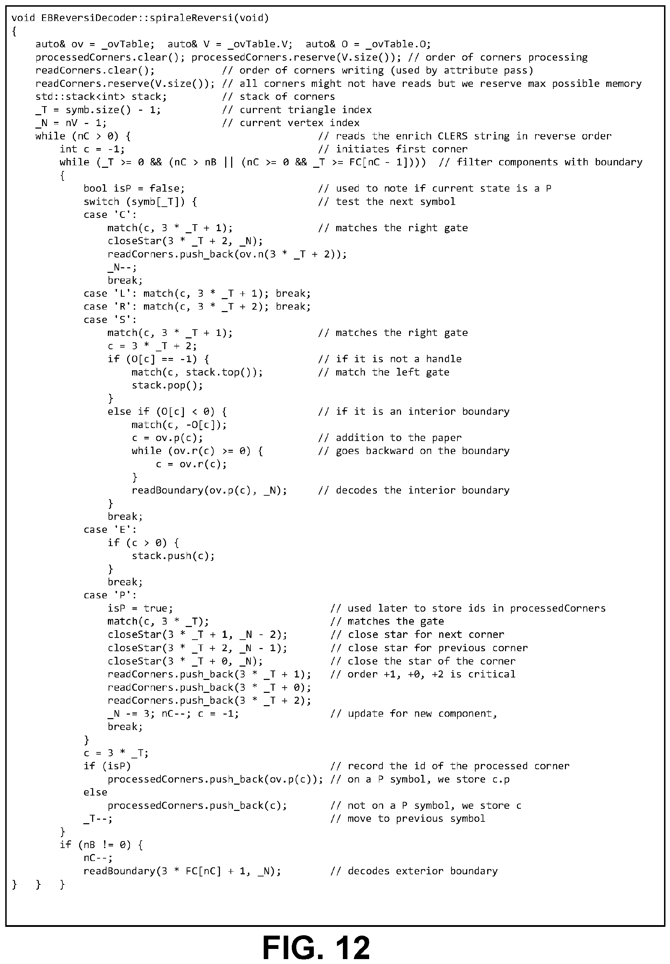

The procedures topoPrepass (see FIG. 11) and spiraleReversi (FIG. 12) are two steps of the topology decoding part. In some embodiments, the procedure topoPrepass may be skipped (at the cost of additional data in the bitstream). It is used to prepare a final CLERS table containing special P symbols that end a connected component with no boundaries. Those symbols are implicitly recovered from the rest of the chain. Then, the spiraleReversi goes through the chain in a single pass to decode the topology.

In example embodiments, the topoPrepass procedure is configured to manage the handles properly. Example embodiments further fill the table ccStartCorners of corner indices to keep track of the first corner of each connected component. This table is used later on for predictions using traversals others than the spiral one (e.g. a vertex degree traversal).

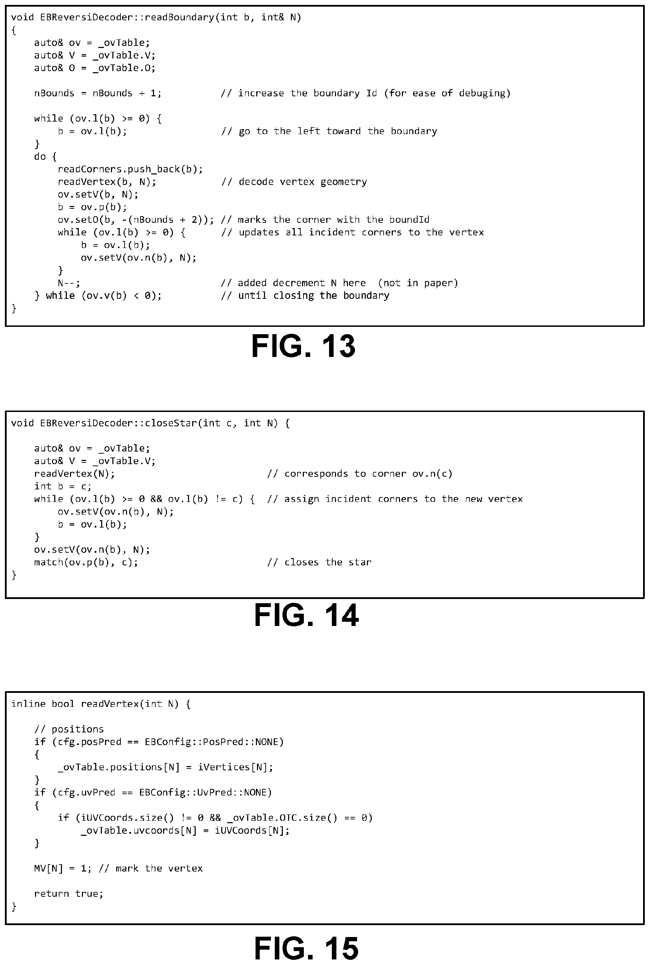

In example embodiments, the spiraleReversi method is configured to store the order of processing of the corners (table processedCorners) and of reading of the corners (table readcorners). Those two tables are used later on when doing successive traversals for attributes predictions using the spirale order (i.e. not the vertex degree). The readBoundary (FIG. 13) is also configured to update the readCorners table. The method closestar operates as described in Lewiner et al. (2004). The method readvertex is configured to consume attributes only if predictions are off. Otherwise, the predictions are read and computed during some other passes later.

In an example embodiment, once the topology is decoded, some or all of the following steps are executed (see FIG. 5):
1. Decode attributes using main index table.
2. Decode attributes using auxiliary index table if any.
3. Decode per face attributes.
4. Finalize the deduplication if needed.
5. Dequantize the attributes of the Corner table (CT) mesh if option is on (off vor v-dmc).
6. Reindex the topology if option is on.
7. Convert the decoded corner table back to a triangle set.

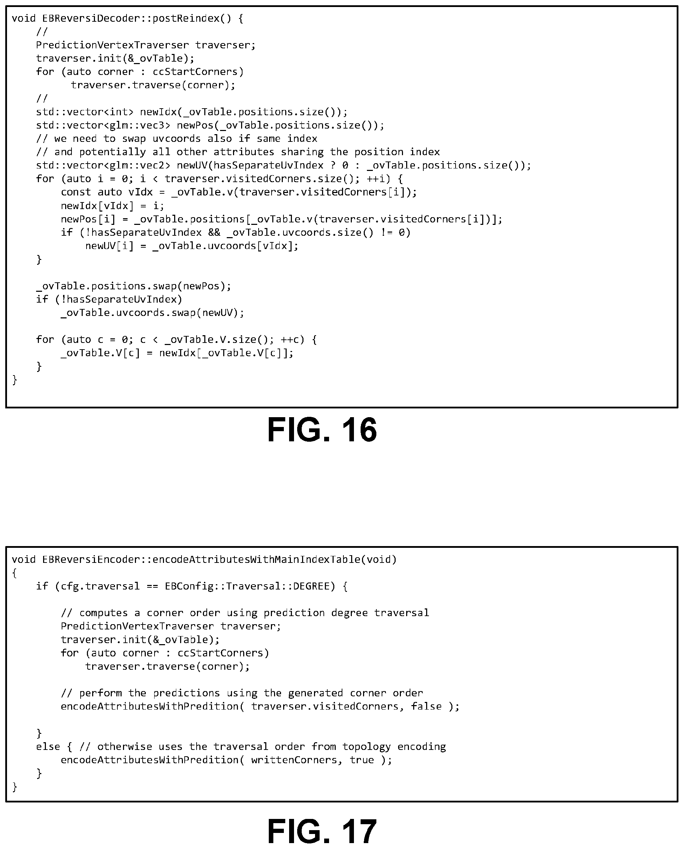

An example procedure postReindex that performs the topology reindexing is presented by FIG. 16. Compared to a forward implementation, it is simplified because no dummy points have to be handled and there is no need to manage multiple table starts. Instead, only the startcorners are used. The corner table does not need to be finalized with proper (shifted) indices since they are already valid. The decoding of the attributes is performed by steps 1 to 3.

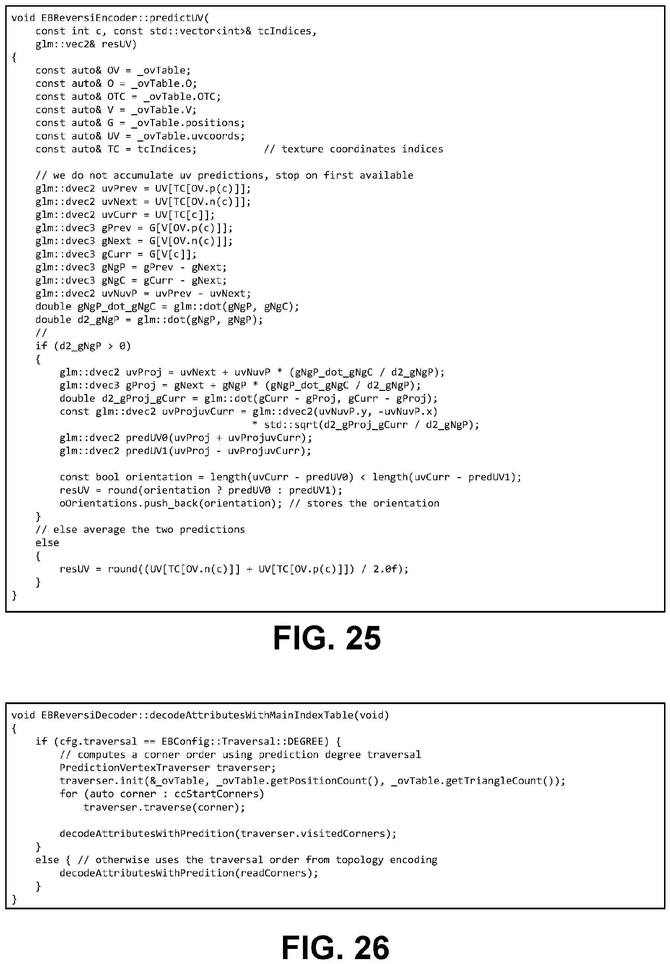

**Per vertex attributes using main index table.** The encoding and decoding of attributes using a main index table is initiated by the procedure *encodeAttributesWithMainIndexTable* (FIG. 17), or *decodeAttributesWithMainIndexTable* (FIG. 26), as appropriate. Those procedures use the traversal method selection from the topology order (EB) or using vertex degree traversal (DEGREE), although any other traversal such as DEPTH could alternatively be used. Note that in the EB case the traversal order is the one contained by the *written Corners* table that was populated during the topology traversal. For the DEGREE case, the traversal may be performed using a Vertex Degree traverser such as that described in EP 23306154.8 for each start corner of each connected component (the table of *ccStartCorners* generated during the topology stages).

Using the proper traversal table, the *encodeAttributeWithPrediction(traversal)* or *decodeAttributeWithPrediction(traversal)* procedure is invoked as appropriate. The attribute prediction method invokes the position predictor *posEncodeWithPrediction(c)* or *posDecodeWithPrediction(c)* for each corner of the traversal given as parameter. Once all the positions are predicted, it then optionally (if UV uses main index) performs the same work for the uv coordinates by invoking the *uvEncodeWithPrediction* or *uvDecodeWithPrediction* for each corner of the traversal given as parameter. This operation would be performed as additional passes for any other attributes using main index table such as normal vectors, colors, other.

At the encoding, iteration over some traversal tables is performed in reverse to allow the decoder to perform its own iterations in a forward direction (since the topology traversal algorithm will be performed in reverse by the decoder). Hence the parameter "reverse" of the *encodeAttributesWithPredition* procedure that is set to true when using the EB traversal and set to false when using the DEGREE traversal.

Example embodiments may perform the process of managing the deduplicates is modified from TMv6. In TMV6 positions and attributes are processed in the same pass, whereas here we use separate passes, which may lead to better predictions of the attributes. We thus reorganize the structure of the algorithm and we store in a table named *predictCorner* a Boolean for each corner that is set by first pass (the position pass) and used by any other subsequent passes (e.g. the uv prediction, if using main index in our implementation) to skip the prediction for the vertices that are duplicated due to the non-manifold issue during the preprocessing (see FIG. 3).

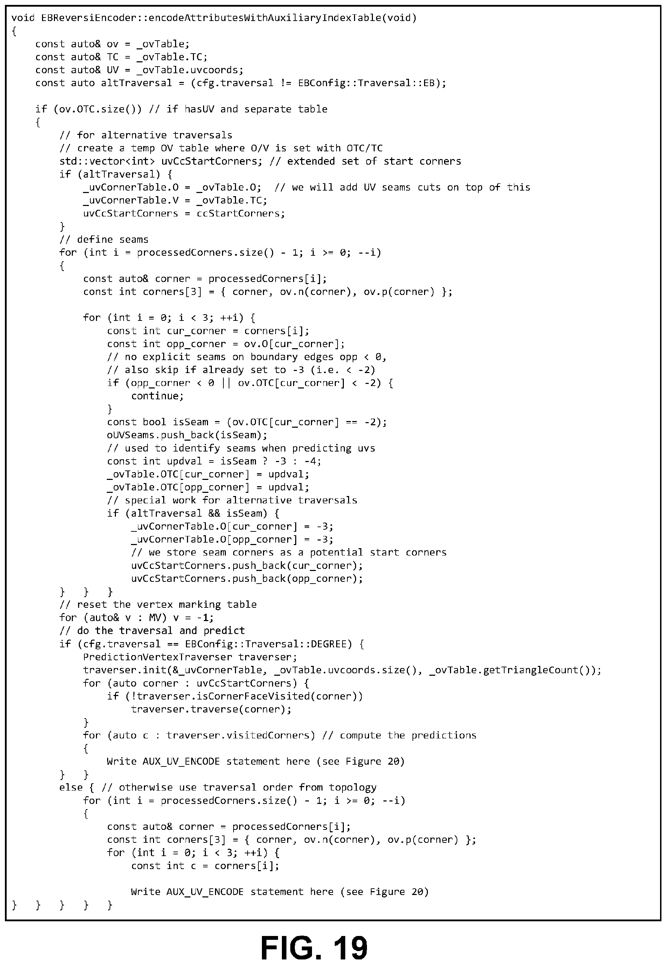

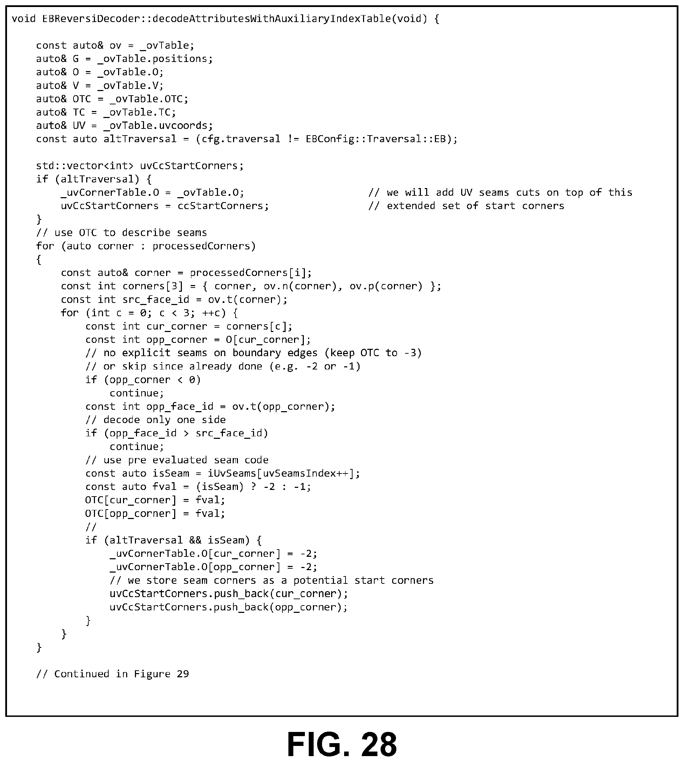

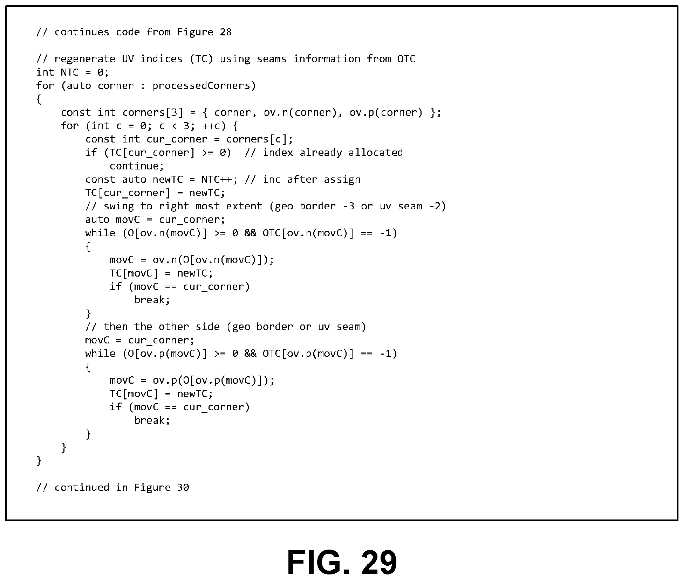

**Per vertex attributes using auxiliary index table.** The encoding or decoding of attributes using an auxiliary index table is initiated by the procedure *encodeAttributesWithAuxiliaryIndexTable* (FIG. 19) or *decodeAttributesWithAuxiliaryIndexTable* (FIGs. 28-30) as appropriate.

The *encodeAttributesWithAuxiliaryIndexTable or decodeAttributesWithAuxiliaryIndexTable* procedure follows the same general structure as the correspond procedure *encodeSeparateindexAttributes* or *decodeSeparateindexAttributes* from the forward solution implemented in TM v6. One difference is that TMv6 invokes the procedure per component whereas example embodiments described herein performs the traversal in one call. Also, example embodiments do not test for virtual points anymore during the uv seams definition, but a statement is added that detects boundaries using the opposite table to skip uv seams definition. There is no need to define a seam if we are on a boundary, so we make an economy by not pushing into the *isSeam* table.

Once the seams are properly defined, example embodiments invoke the *uvEncodeWithPrediction* for each corner of the selected traversal order (EB, DEGREE, DEPTH, ...) procedure.

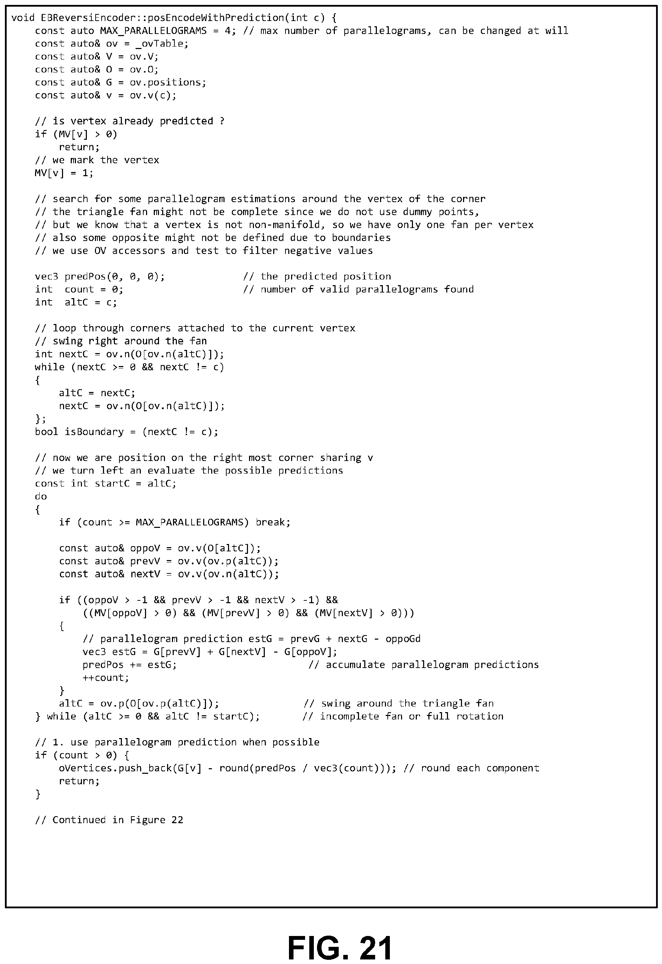

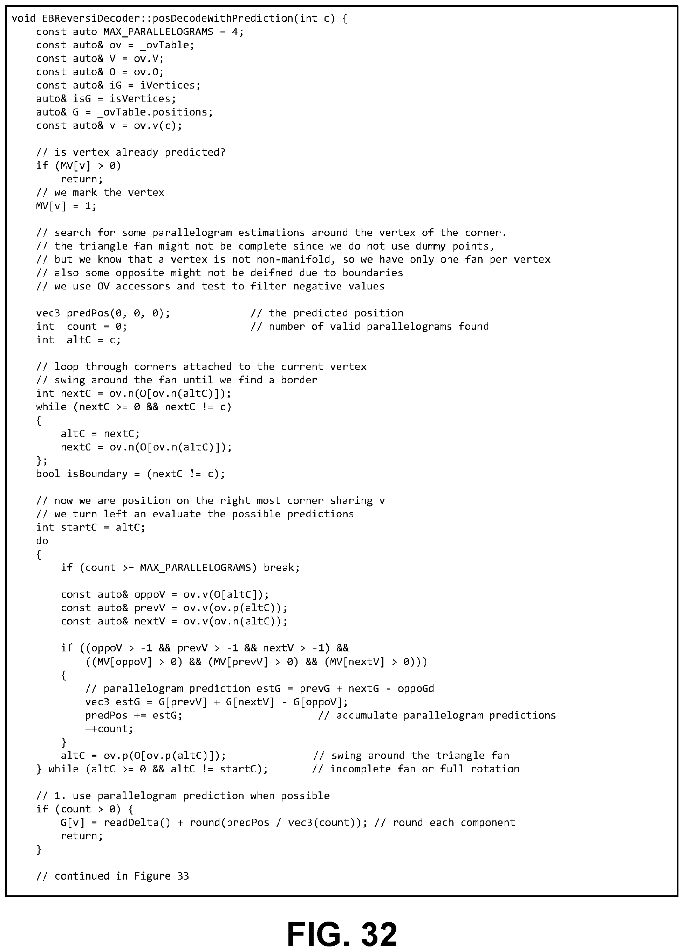

**Per vertex attributes predictions.** The predictions of vertex positions in example embodiments are performed by the procedure *posEncodeWithPrediction* (FIGs. 21-22) and *posDecodeWithPrediction* (FIGs. 32-33).

In TMv6, the predictions of a given corner involve turning around the vertex of this corner to search for multiple parallelograms, to compute the predictions. When a surrounding corner is detected as a dummy point it is skipped so as not to disturb the prediction. As seen in the topology section, example embodiments mark the boundaries instead of using dummy points. The predictions make use of this boundary. For each corner, the associated vertex is either connected to a full triangle fan or to a partial one if on boundary. In an example embodiment, the search of parallelograms for a given corner thus rotates around its associated vertex, starting from the corner to the right until it reaches a boundary or the corner again. It then turns in the other direction until it reaches another boundary or c.

If at least one parallelogram is found, it is used for the prediction (more than one can be used if available) and push the residual in the *oVertices* table, otherwise we use a delta coding with next corner if already predicted, otherwise with previous corner if already predicted. For arithmetic coding the delta values would benefit to be stored in another table dedicated to deltas. In the current version those are also pushed into the *oVertices* table.

Example embodiments make use of another fallback (case 3) which is: if we shall be a start, but we are near an external boundary where corners were already predicted we use it for delta prediction and push in *oVertices.* It may improve AC coding for this data to be pushed into a table specific to delta residuals.

Example embodiments fall back to pushing a new start in global coordinates to the *osVertives* table. Normally this occurs only if c is the first corner of a new connected component.

The arithmetic coding of the tables *oVertices* (the predicted positions) and *osVertices* (the start positions) may be performed using the techniques as described in TMV6.0.

The *posDecodeWithPrediction* procedure may be used to reconstruct the position values from predictions.

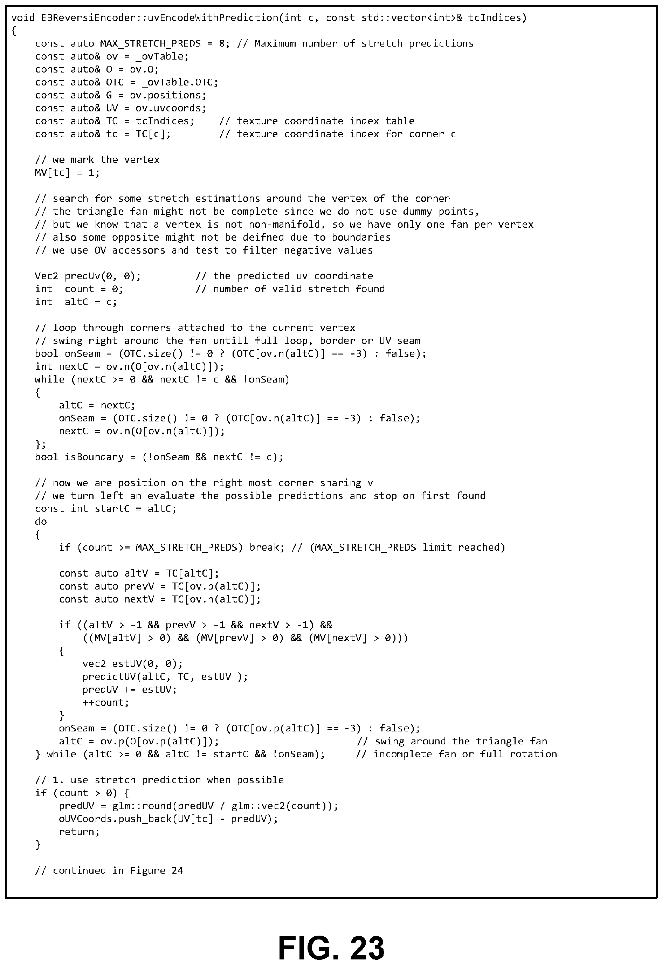

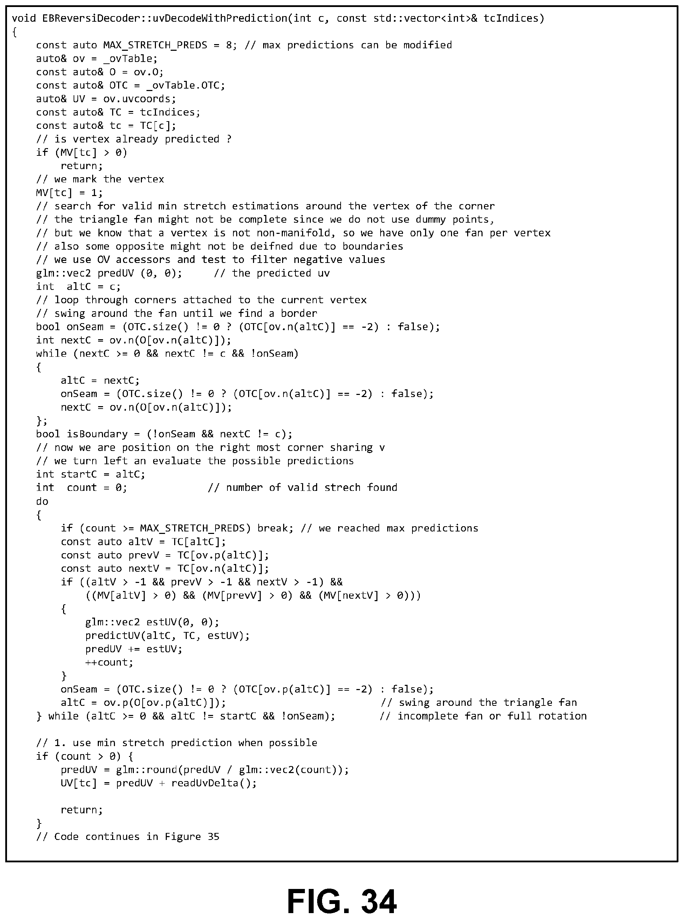

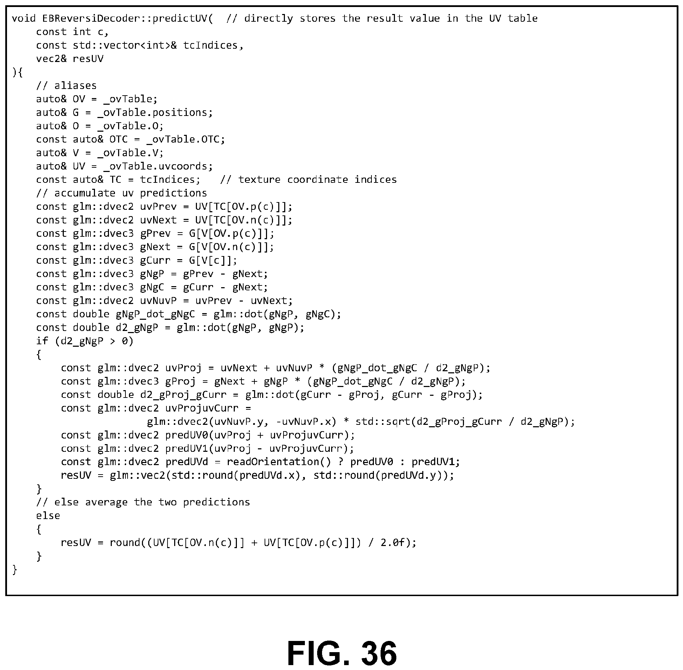

The predictions of vertex uv coordinates are performed in some embodiments by the procedure *uvEncodeWithPrediction* (FIGs. 23-24), *uvDecodeWithPrediction* (FIGs. 34-35) which performs the search for valid predictors around the corner in the same manner as for positions and the two *predictUV* (FIG. 25, FIG. 36) procedures that actually compute the min-stretch predictions.

The four methods take as a parameter a reference to the index table (*tcIndices*) to be used for the predictions. This permits use of the prediction mechanism for attributes that use the main index table and for attributes that uses auxiliary index table. The general algorithm is then simplified compared to the one of TM v6 that makes specifics algorithmics for each kind of index table.

In example embodiments, the process of predicting UV coordinates includes checking if a min stretch is possible whatever the corner, before falling back to delta, then to boundary, then to a start in uv space global coordinates. This makes it possible to use UV predictions even for some corners that are a start with respect to the position prediction. This is not the case with the forward version of TMv6 which systematically sets a start for first corner of a connected component, then delta for the two next corners, then min stretch predictions for the other corners.

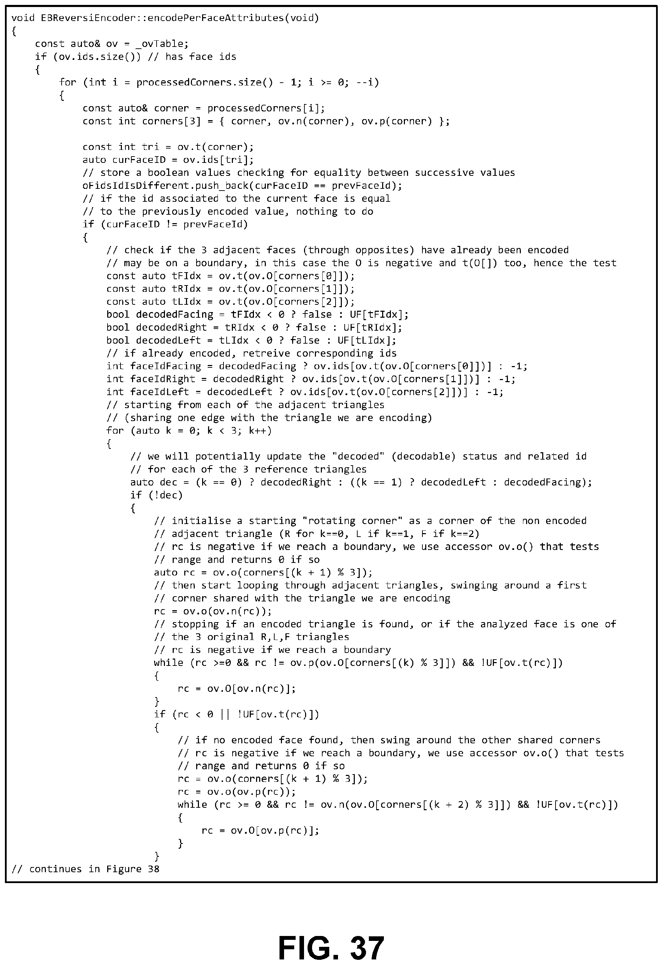

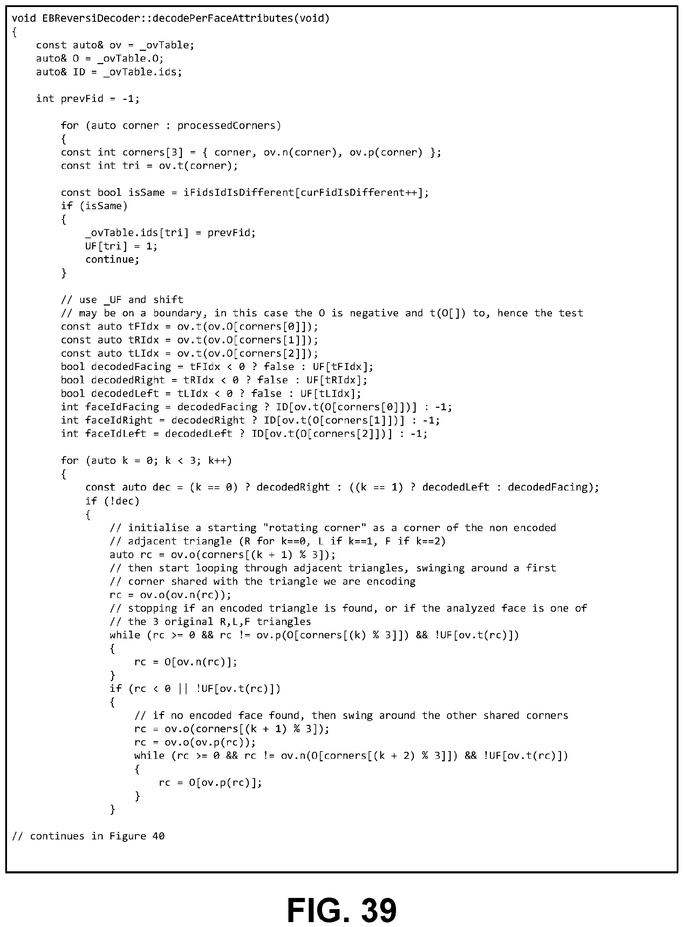

**Per face attributes.** A technique for per face attributes coding of TMv6 is presented in European Patent Application No. 23305941.9. Example embodiments described herein are simplified since they no longer need to handle virtual points. Example embodiments are also adapted to handle boundaries using the opposite table. The procedure *encodePerFaceAttributes* is presented in FIGs. 37-38, and the procedure *decodePerFaceAttributes* is presented in FIGs. 39-40. Mainly, when looking at the neighborhood for finding support for the predictions, example embodiments also test the opposite table for negative values to check the existence of a boundary or not. Thanks to the coding of boundaries with negative integers in the corner table, the overall complexity is thus reduced.

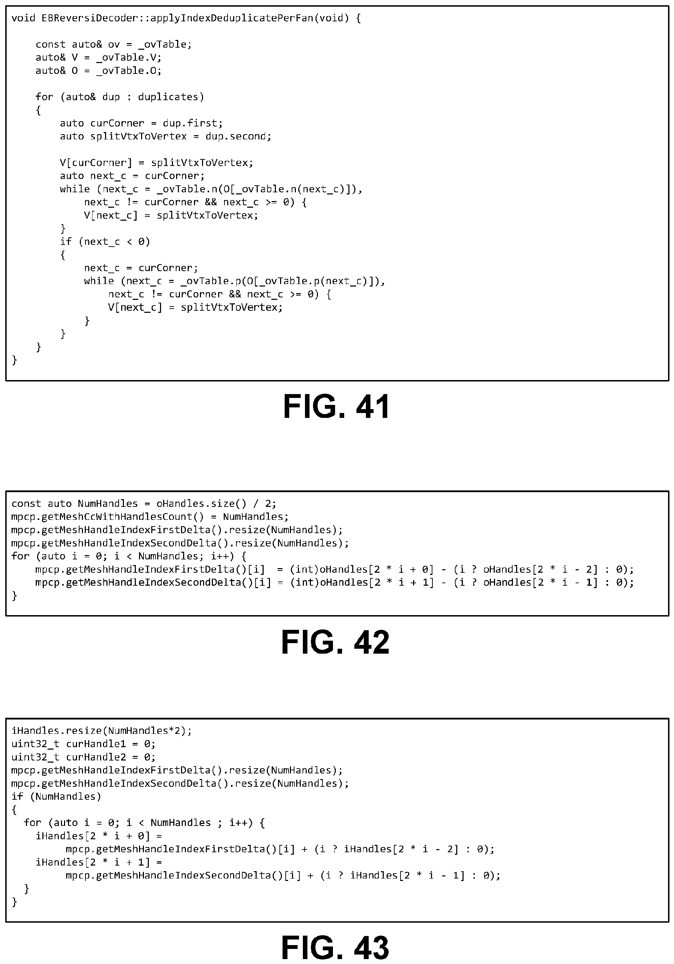

**Arithmetic encoding and decoding.** The general schema for coding and decoding the different tables is the same as presented in TMv6.0. Example embodiments provide for a modified coding of Handles. In example embodiments, the handles table is used to code the handles but also the boundaries using negative integer values for the first handle pair of values (see FIG. 11). The AC coding model from TMv6 is not as simple anymore since we would also need to code the sign. In some embodiments the handles are coded as delta values using as seen in FIGs. 41 and 42.

In an example embodiment, a mesh coding header syntax includes a parameter indicating a mesh codec type, such as the parameter mesh_codec_type. The parameter may take on values with identifiers such as CODEC_TYPE_FORWARD for a forward codec or CODEC_TYPE_REVERSE for a reverse codec type.

In an example embodiment, a mesh position coding payload syntax (such as that of section I.8.3.7 of V-DMC) may be implemented as follows:

| mesh_position_coding_payload( ) { | | **Descriptor** |
|---|---|---|
| **mesh_vertex_count** | | vu(v) |
| If **(mesh_codec_type ==** CODEC_TYPE_REVERSE){ | † | |
| **mesh_triangle_count** | † | vu(v) |
| } | † | |
| **mesh_clers_count** | | vu(v) |
| **mesh_cc_count** | | vu(v) |
| If **(mesh_codec_type ==** CODEC_TYPE_FORWARD){ | † | |
| **mesh_virtual_vertex_count** | | vu(v) |
| } | † | |
| If (**mesh_codec_type ==** CODEC_TYPE_REVERSE){ | † | |
| **mesh_position_start_count** | † | |
| **}** | † | |
| If (**mesh_codec_type ==** CODEC_TYPE_FORWARD){ | † | |
| fore i=0; i<mesh_virtuat_vertex_count; i++ ){ | | |
| **mesh_virtual_index_delta[** i ] | | vu(v) |
| } | † | |
| } | | |
| **mesh_cc_with_handles_count** | | vu(v) |
| NumHandles = 0 | | |
| If (**mesh_codec_type ==** CODEC_TYPE_FORWARD){ | † | |
| fore i=0; i<mesh_cc_with_handles_count; i++ ){ | | |
| **mesh_handles_cc_offset**[ i ] | | vu(v) |
| **mesh_handles_count**[ i ] | | vu(v) |
| NumHandles += mesh_handles_count[ i ] | | |
| } | | |
| } | † | |
| If **(mesh**_**codec_type ==** CODEC TYPE_REVERSE){ | † | |
| NumHandles = **mesh_cc_with_handles_count** | † | |
| } | † | |
| fore i=0; i<NumHandles; i++ ){ | | |
| **mesh_handle_index_first_delta**[ i ] | | vi(v) |
| **mesh_handle_index_second_delta**[ i ] | | vi(v) |
| } | | |
| If (**mesh_codec_type ==** CODEC TYPE_FORWARD){ | † | |
| **mesh_coded_handle_index_second_shift_size** | | vu(v) |
| for( i=0; i<NumHandles; i++ ){ | | |
| **mesh_handle_index_second_shift**[ i ] | | ae(v) |
| } | | |
| } | † | |
| length_alignment( ) | | |
| **mesh_coded_clers_symbols_size** | | vu(v) |
| prev[ 1 ] = 0 | | |
| prev[ 0 ] = 0 | | |
| Crun = 0 | | |
| fore i=0; i<mesh_clers_count; i++ ){ | | |
| **mesh_clers_symbol**[ i ] | | ae(v) |
| prev[ 1 ] = prev[ 0 ] | | |
| prev[ 0 ] = (mesh_clers_symbol[ i ] + 1) >> 1 | | |
| Crun = mesh_clers_symbol[ i ] ? 0 : Crun + 1 | | |
| } | | |
| length_alignment( ) | | |
| if(mesh_codec_type== CODEC_TYPE_FORWARD){ | † | |
| NumPositionStart = mesh_cc_count | † | |
| } | † | |
| if (**mesh_codec_type ==** CODEC_TYPE_REVERSE){ | † | |
| NumPositionStart = **mesh_position_start_count**; | † | |
| } | † | |
| if( mesh_position_deduplicate_method == MESH_POSITION_DEDUP_DEFAULT) { | † | |
| mesh_position_deduplicate_information( ) | † | |
| } | † | |
| for( i=0; i< NumPositionStart; i++ ){ | | |
| for( j=0; j< 3; j++ ){ | | |
| **mesh_position_start**[ i ][ j ] | | U(V) |
| } | | |
| } | | |
| length_alignment( ) | | |
| **mesh_coded_position_residuals_size** | | vu(v) |
| NumPredictedPositions = mesh_vertex_count - mesh_cc_count | | |
| for( i=0; i<NumPredictedPositions; i++ ){ | | |
| for( j=0; j< 3; j++ ){ | | |
| **mesh_position_residual**[ i ][ j ] | | ae(v) |
| } | | |
| if( mesh_position_prediction method == 0 ){ | | |
| vi = vertex index_in_cc(i) | | |
| if( vi == 1 ){ | | |
| k = position_start_index_in_cc_for_vertex(i) | | |
| mesh_position_non_start[i] = mesh_position_start[k] + | | |
| mesh_position residual[i] | | |
| } else if ( vi == 2 ) { | | |
| mesh_position_non_start[i] = mesh_position_non_start[i - 1] + | | |
| mesh_position residual[i] | | |
| } else { | | |
| predCount = 0 | | |
| predPos = (0, 0, 0) | | |
| while ( positioin_prediction_available(estG) ) {_ | | |
| if ( preCount > mesh_position_predition_max_paralleograms_minus1 ) { | | |
| break; | | |
| } | | |
| predPos += estG | | |
| predCount ++ | | |
| } | | |
| if ( predCount > 0 ) { | | |
| predPos /= predCount | | |
| } else { | | |
| predPos = mesh_position_non_start[i - 1] | | |
| } | | |
| mesh_position_non_start[i] = predPos + mesh_position_residual[i] | | |
| } | | |
| } | | |
| } | | |
| length_alignment( ) | | |
| } | | |

A mesh position coding payload may have semantics such as the following:
• **mesh_vertex_count** specifies the number of vertices in the decoded mesh. (mesh_vertex_count may not include virtual points which are inserted during the topology reconstruction and removed in the subsequence mesh cleaning phase.
• **mesh_triangle_count** specifies the number of triangles in the decoded mesh.
• **mesh_clers_count** specifies the number of encoded CLERS symbols. (The first symbol of each per connected component sequence of symbols is not coded. After topology reconstruction the number of triangles is ( mesh_clers_count + mesh_cc_count). After mesh cleaning an unspecified number of triangles connected to virtual points are removed.)
• **mesh_cc_count** specifies the number of connected components comprised in the coded mesh. In case of mesh_codec_type=CODEC_TYPE_REVERSE, **mesh_cc_count** specifies the number of connected components with boundaries comprised in the coded mesh (the number of components without boundaries is deduced from the CLRES parsing). (The number of absolute coded position can be less than mesh_cc_count if first positions of connected components are duplicates of previously encoded indices.)
• **mesh_position_start_count** specifies the number of start positions.
• **mesh_virtual_vertex_count** specifies the number of virtual vertices inserted to close holes in the reconstructed topology.
• **mesh_virtual_index_delta**[ i ] specifies the difference between the values of the i-th virtual point index and the (i - 1)-th virtual point index when i is greater than 0. When i equal to 0 mesh_virtual_index_delta[ 0 ] specifies the value of the index of the first virtual point.
• **mesh_cc_with_handles_count** specifies the number of connected components with non zero handle count.
• **mesh_handles_cc_offset**[ i ] specifies the difference between the values of the connected component index of the i-th connected component with non zero handle count and the (i - 1)-th connected component with non zero handle count when i is greater than 0. When i equal to 0 mesh_handles_cc_offset[ 0 ] specifies the connected component index of the first connected components with non zero handle count.
• **mesh_handles_count**[ i ] specifies the number of handles comprised in the i-th connected component with non zero handle count.
• **mesh_handle_index_first_delta**[ i ] specifies the difference between the triangle index of the i-th handle first corner and the (i - 1)-th handle first corner when i is greater than 0. When i equal to 0 mesh_handle_index_first_delta[ 0 ] specifies the triangle index of the first handle first corner.
• **mesh_handle_index_second_delta**[ i ] specifies the difference between the triangle index of the i-th handle second corner and the (i - 1)-th handle second corner when i is greater than 0. When i equal to 0 mesh_handle_index_second_delta[ 0 ] specifies the triangle index of the first handle second corner.
• **mesh_coded_handle_index_second_shift_size** specifies the size in bytes of the arithmetically coded sequence of mesh-handle-index-second-shift values, including the final byte alignement.
• **mesh_handle_index_second_shift**[ i ] specifies the shift to apply when computing the corner index associated with the i-th handle destination. (handle indices are relative to a triangle/face index as related corner indices can be deduced implicitely. The corner index of the fist handle is conforming to (3 * T + 0). The corner index of the second handle f index is conforming to either (3 * T+1) or(3 * T+2). mesh_handle_index_second_shift[ i ] is used to disciminate those two cases.)
• **mesh_coded_clers_symbols_size** specifies the size in bytes of the arithmetically coded sequence of CLERS symbols, including the final byte alignement. (Specifying mesh_coded_clers_symbols_size explicitely enables to pursue parsing and decode CLERS symbols in parallel.
• **mesh_clers_symbol**[ i ] specifies the value of the i-th CLERS symbol. The values are interpreted as specified by the following table:

| **mesh_clers_symbol[ i ]** | 0 | 1 | 3 | 5 | 7 |
|---|---|---|---|---|---|
| **i-th CLERS symbol** | C | S | L | R | E |

• **mesh_position_start**[ i ][ j ] specifies the value of the j-th component of the first position of the i-th connected component as an unsigned integer coded using mesh_position_bit_depth_minus1 + 1 bits.
• **mesh_coded_position_residuals_size** specifies the size in bytes of the arithmetically coded sequence of positions residuals, including the final byte alignement. (Specifying mesh_coded_position_residuals_size explicitly enables to pursue parsing and decode position prediction residuals in parallel.)
• **mesh_position_residual**[ i ][ j ] specifies the value of the prediction residual associated with the j-th component of the i-th predicted position.

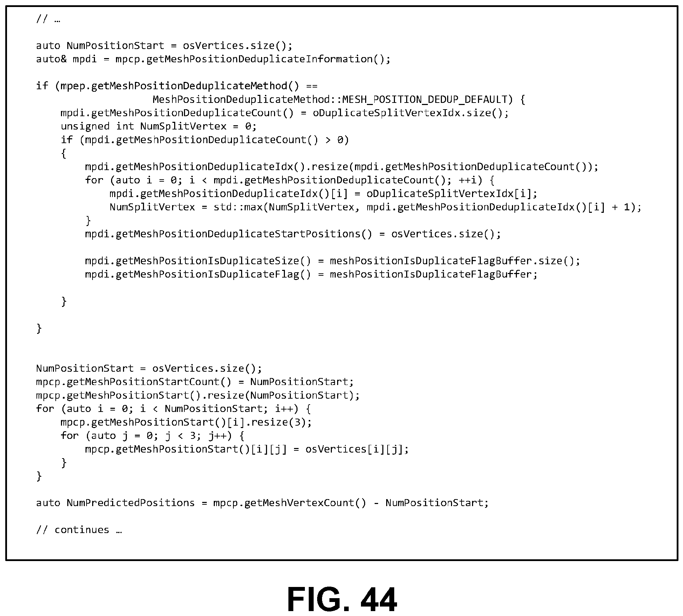

**Serializing/Un-serializing.** In an example embodiment, the *unserialize* method is invoked after the syntax parsing and before the decode method is invoked. It finalizes the arithmetic decoding and sets some other global variables that cannot be deduced during syntax parsing. Compared to the corresponding method from TMv6, the *unserialize* method according to an example embodiment has some or all of the following features:
- Code sections that are related to virtual points are removed as unnecessary.
- Parts related to deduplication in the *serialize* (FIG. 43) and *unserialize* (FIGs. 44-45) are modified.
- The nV and nUV global variables are computed as follows after the arithmetic decoding of iVertices, isVertices, iUVCoords and isUVCoords is performed as follows, with nV being the total number of decoded positions and nUV the total number of decoded uv coordinates: 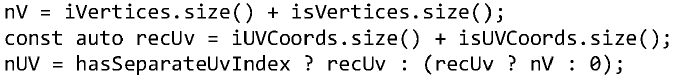
- The global variable NumPositionStart is set to **mesh_position_start_count** instead of **mesh**_**cc**_**count** since **mesh_cc_count** is not representing the full set of connected components, but only the ones with a boundary. The new **mesh_position_start_count** from the syntax is used to find the value of absolute positions.

Example embodiments may use a syntax largely in accordance with the Video-based dynamic mesh coding (V-DMC) working draft, although with some modifications. For example, in some embodiments, the syntax allows for signaling that the mesh is a reverse type. For example, the **mesh_codec_type** may be signaled as a named CODEC_TYPE_REVERSE. As shown in the syntax proposed above, in case of reverse **mesh_codec_type=** CODEC_TYPE_REVERSE, the parameters **mesh_triangle_count** and **mesh_position_start_count** are included in the syntax. In forward codecs, those parameters are deduced by other means, but they cannot be deduced in the same manner in the reverse version. The parameter **mesh_cc_count** may be signaled in the syntax for both forward and reverse codecs, but the meaning of that parameter may be different for those two cases as described above.

As is further shown above in the example syntax, in the case of reverse **mesh_codec_type=** CODEC_TYPE_REVERSE
- Information related to virtual points is removed.
- Information related to AC coding of handles is removed.
- The parameters **mesh_triangle_count** and **mesh_position_start_count** are signaled.

In reverse mode, mesh_attribute starts may be stored in any case. This is because we cannot deduce those anymore since uv predictor may have some predictions even for a start position. Hence, the uv start array does not have the same size as the position start array.

The presented software code is a (sometime simplified) C++ code.

Mathematics:
- dvec2 are mathematical 2D vectors of c/c++ double values (64bits floating point)
- vec2 are mathematical 2D vectors of c/c++ float values (32bits floating point).
- std: : sqrt returns mathematical square root of the parameter
- std: : round returns mathematical rounding to nearest integer of the parameter

Data structures:
- std::vector<float> name; is an array of floats named name. float could be replaced another type such as vec2, then the following methods would all operate on vec2 values instead of floats.
- name[i] dereferences the array name at index i
- name.push_back(v) adds a new element of value v at the end of the array name by increasing its size of 1 element.
- name.reserve(n) reserves some memory for the vector name but its effective number of elements name.size() is not changed. Such a memory pre-allocation prevents multiple memory realocations on multiple calls to name.push_back().
- name.assign(n,v) resizes the array name to contain n elements and set all the values to v. v is optional, default value is used if not provided
- name.resize(n, v) resizes the array name to contain n elements and set the new values to v. Existing values are left unchanged. v is optional, default value is used if not provided.

Corner table (named ov or _ovTable):
- ov.t(c) returns the triangle index of corner of index c if c is valid (in [0,NB_CORNERS]), -1 otherwise.
- ov.n(c) returns next corner index of corner of index c if c is valid (in [0,NB_CORNERS]), -1 otherwise.
- ov.p(c) returns previous corner index of corner of index c if c is valid (in [0,NB_CORNERS]), -1 otherwise.
- ov.o(c) returns opposite corner index of corner of index c if c is valid (in [0,NB_CORNERS]), -1 otherwise.

FIG. 4 illustrates example source code for an encoding procedure according to an example embodiment.

FIG. 5 illustrates example source code for a decoding procedure according to an example embodiment.

FIG. 6 illustrates example source code for a topology encoding procedure according to an example embodiment. FIG. 6 illustrates a topology encoding procedure named encodeTopology. As compared to the procedure named Compress in Lewiner et al. (2004), the encoding procedure of FIG. 6 includes additional features such as the recording of the start corner of the connected component and recording of the corner processing order. These features are illustrated in FIG. 6.

As seen in FIG. 6, the procedure encodeTopology calls the procedure compressComponent, which, as seen in FIG. 7, makes the determination of which symbol (e.g. C, L, E, R, or S) to append to the CLERS table oClers. The procedure encodeTopology also calls the procedure writeVertex, thus providing an ordered table of corners of the triangular mesh representing an order of corners traversed during the creation of the CLERS table. This table of corners may be used during the prediction of attributes encoded in the main index table, for example. The procedure encodeTopology further appends the corner current corner to the end of a table processedCorners, thus providing a separate ordered table of corners of the triangular mesh representing an order of corners traversed during the creation of the CLERS table. This table of corners may be used during the prediction of attributes encoded in an auxiliary table and/or in one or more tables used to encode per-face IDs.

FIG. 7 illustrates the procedure compressComponent. As compared to the corresponding procedure in Lewiner et al. (2004), this procedure includes additional features such as the recording of each corner in a processed corners table.

FIG. 8 illustrates the procedure writeBoundary, which goes through the boundary of _b (a corner given as parameter) and writes each vertex once in order.

FIG. 9 illustrates the procedure checkHandle according to an example embodiment.

FIG. 10 illustrates the procedure writeVertex according to an example embodiment. As shown in FIG. 10, the procedure writeVertex appends a corner identifier c to the table writtenCorners, thus providing an ordered table of corners of the triangular mesh representing an order of corners traversed during the creation of the CLERS table. As seen in FIG. 6, the procedure writeVertex is called by the procedure encodeTopology.

FIGs. 11-16 illustrate topology decoding procedures according to an example embodiment.

FIG. 11 illustrates the procedure topoPrepass according to an example embodiment.

FIG. 12 illustrates the procedure spiraleReversi according to an example embodiment. As illustrated in FIG. 12, a decoder obtains a CLERS table representing an edgebreaker encoding of a topology of a triangular mesh and reconstructs the topology of the triangular mesh using a reverse traversal of the CLERS table. In the process of reconstructing the topology, the method creates a first ordered table of visited corners readCorners, which may be used for example in decoding attributes from the main index, and a second ordered table of visited corners processedCorners, which may be used for example in decoding attributes from an auxiliary index or from one or more tables storing per-face ID information.

FIG. 13 illustrates the procedure readBoundary according to an example embodiment.

FIG. 14 illustrates the procedure closeStar according to an example embodiment.

FIG. 15 illustrates the procedure readVertex according to an example embodiment.

FIG. 16 illustrates the procedure postReindex according to an example embodiment.

FIGs. 17-25 illustrate procedures related to attribute prediction for encoding according to an example embodiment.

FIG. 17 illustrates the procedure encodeAttributesWithMainlndexTable according to an example embodiment. As shown in FIG. 17, the attribute "true" is provided to the procedure encodeAttributesWithPredition in a case where a topology-based traversal order is used for the attribute encoding. This information is used to set the "reverse" variable indicating that ordered attribute information (e.g. prediction residuals) is created using a reverse iteration over the first ordered table of corners. In the case of a topology-based traversal order, the ordered table of corners may be the table writtenCorners.

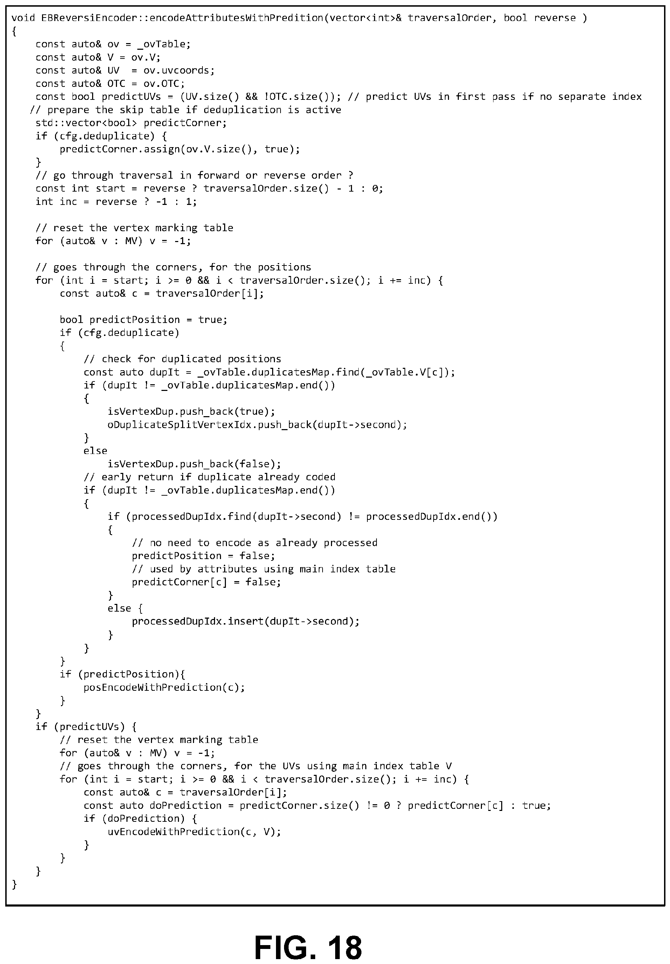

FIG. 18 illustrates the procedure encodeAttributesWithPrediction according to an example embodiment. As shown in FIG. 18, when the "reverse" variable is true (e.g. when a topology-based traversal order is used for the attribute encoding), the iteration over the table traversalOrder[i] is performed in the reverse order. In the case of topology-based traversal for attribute prediction, the table traversalOrder[i] may be set to be the table writtenCorners.

FIG. 19 illustrates the procedure encodeAttributesWithAuxiliarylndexTable according to an example embodiment. As shown in FIG. 19, when a topology-based traversal order is used for the attribute encoding, the iteration over the table processedCorners[i] is performed in the reverse order.

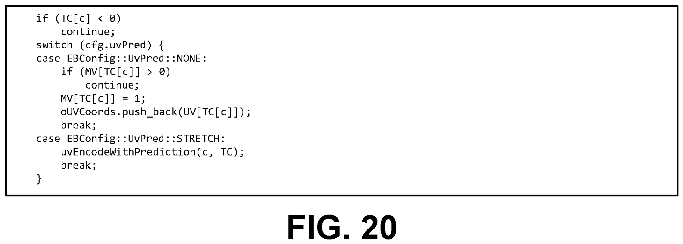

FIG. 20 illustrates the AUX_UV_ENCODE statement to be copied in FIG. 19 according to an example embodiment.

FIG. 21 illustrates a first part of the procedure posEncodeWithPrediction according to an example embodiment.

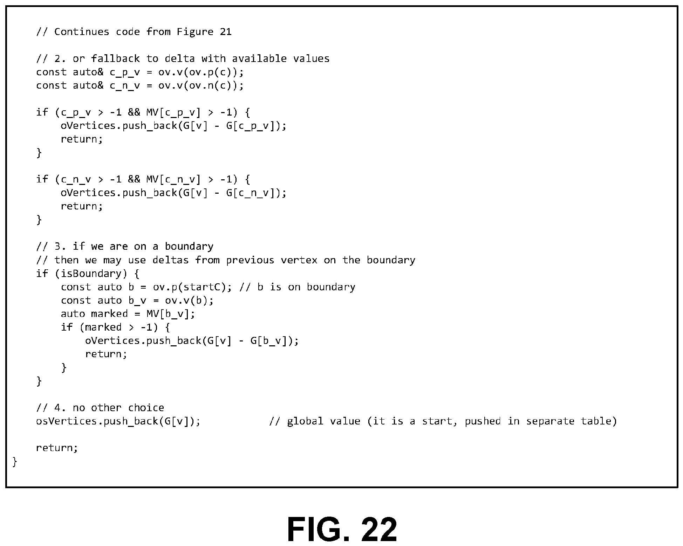

FIG. 22 illustrates a second part of the procedure posEncodeWithPrediction according to an example embodiment.

FIG. 23 illustrates a first part of the procedure uvEncodeWithPrediction according to an example embodiment.

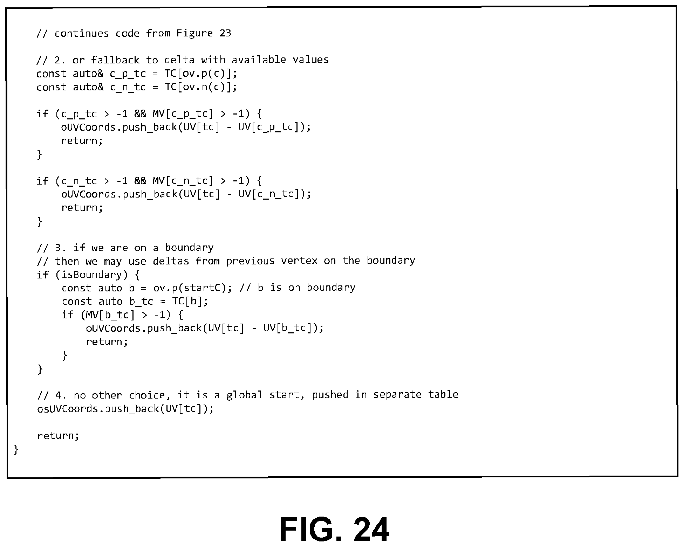

FIG. 24 illustrates a second part of the procedure uvEncodeWithPrediction according to an example embodiment.

FIG. 25 illustrates a procedure predictUV for encoding according to an example embodiment.

FIGs. 26-36 illustrate attribute prediction procedures for decoding according to an example embodiment.

FIG. 26 illustrates a procedure decodeAttributesWithMainlndexTable according to an example embodiment.

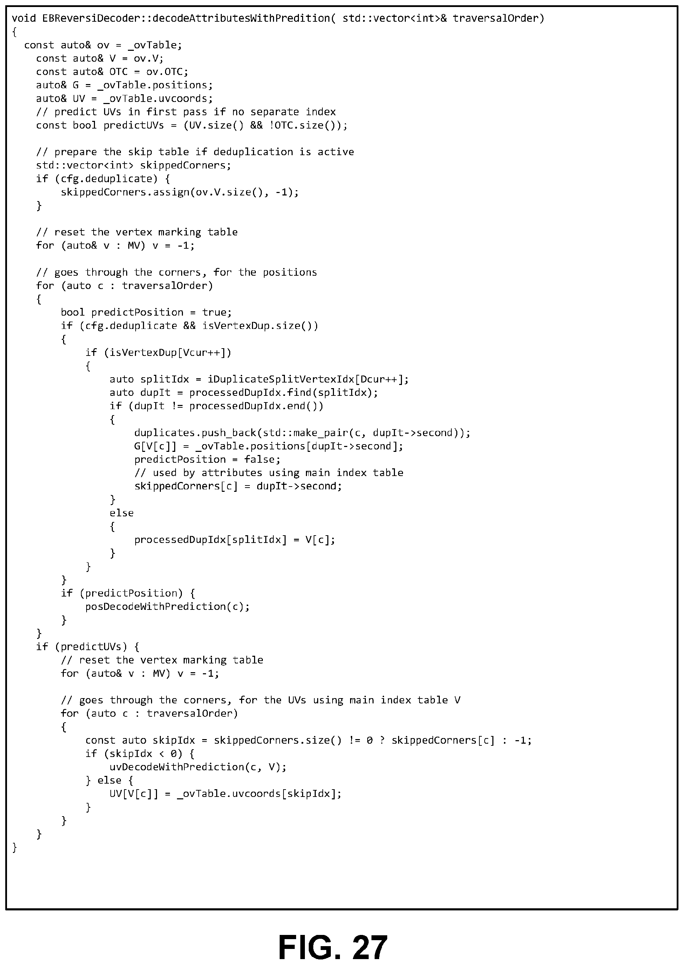

FIG. 27 illustrates a procedure decodeAttributesWithPredition according to an example embodiment. As shown in FIG. 27, the decoding of attributes using prediction includes a forward iteration over the table traversalOrder without regard to the type of traversal used for residual prediction (e.g. without regard to whether the traversal is degree-based, depth-first, or topology-based). In the case of a topology-based traversal order, the table readCorners may be used as the ordered table of corners (see FIG. 26).

FIGs. 28-30 illustrate a procedure decodeAttributesWithAuxiliarylndexTable according to an example embodiment. During the attribute decoding procedure, the table processedCorners, which represents an order of corners traversed during the reverse traversal of the CLERS table, is iterated over in a forward direction for the decoding of attributes in the auxiliary index table.

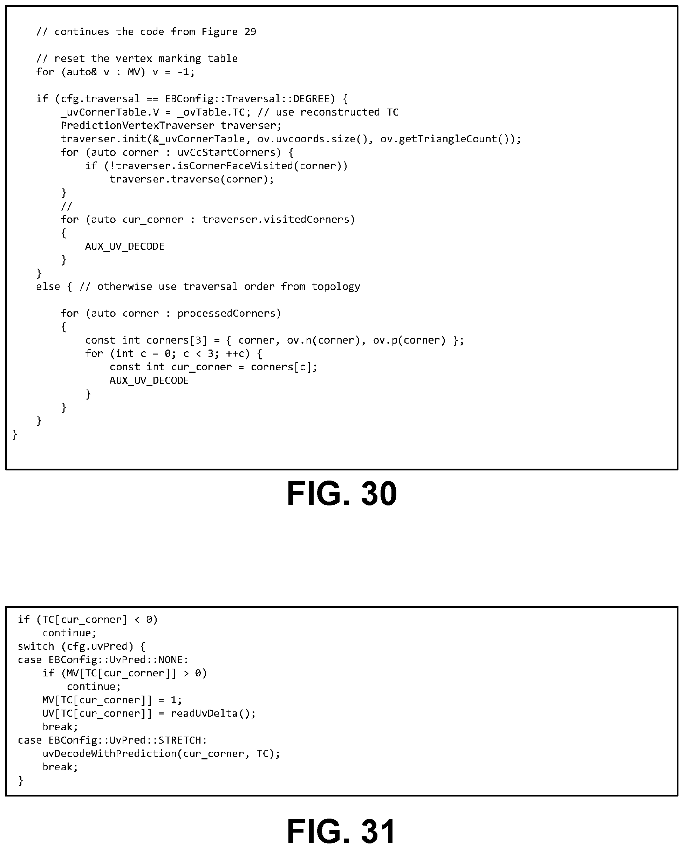

FIG. 31 illustrates an AUX_UV_DECODE statement to be copied in FIG. 30 according to an example embodiment.

FIG. 32 illustrates a first part of the procedure posDecodeWithPredictions according to an example embodiment.

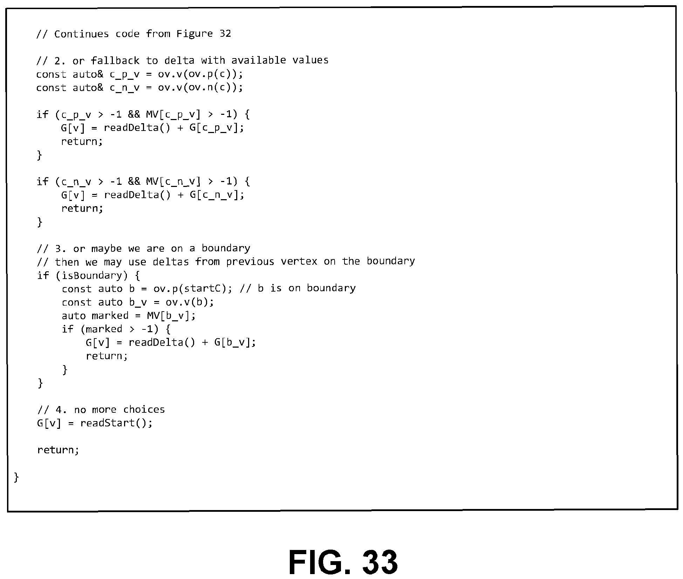

FIG. 33 illustrates a second part of the procedure posDecodeWithPredictions according to an example embodiment.

FIG. 34 illustrates a first part of the procedure uvDecodeWithPrediction according to an example embodiment.

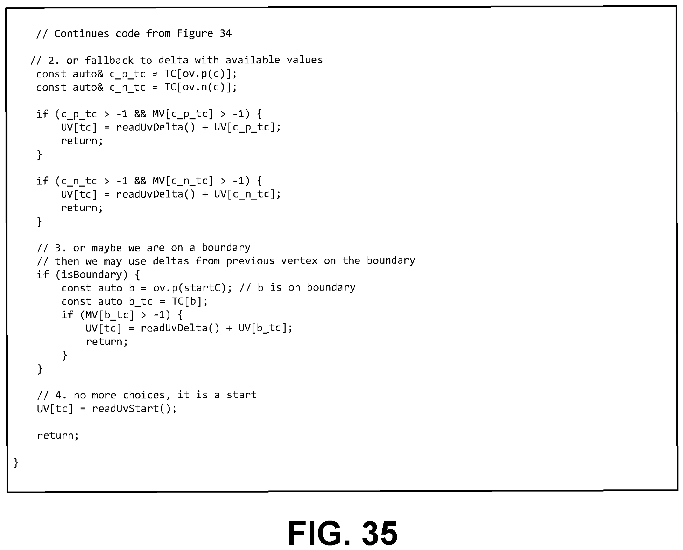

FIG. 35 illustrates a second part of the procedure uvDecodeWithPrediction according to an example embodiment.

FIG. 36 illustrates a procedure predictUV for decoding according to an example embodiment.

FIG. 37 illustrates a first part of the procedure encodePerFaceAttributes according to an example embodiment. As seen in FIG. 37, ordered attribute information is created during a reverse iteration over the table processedCorners.

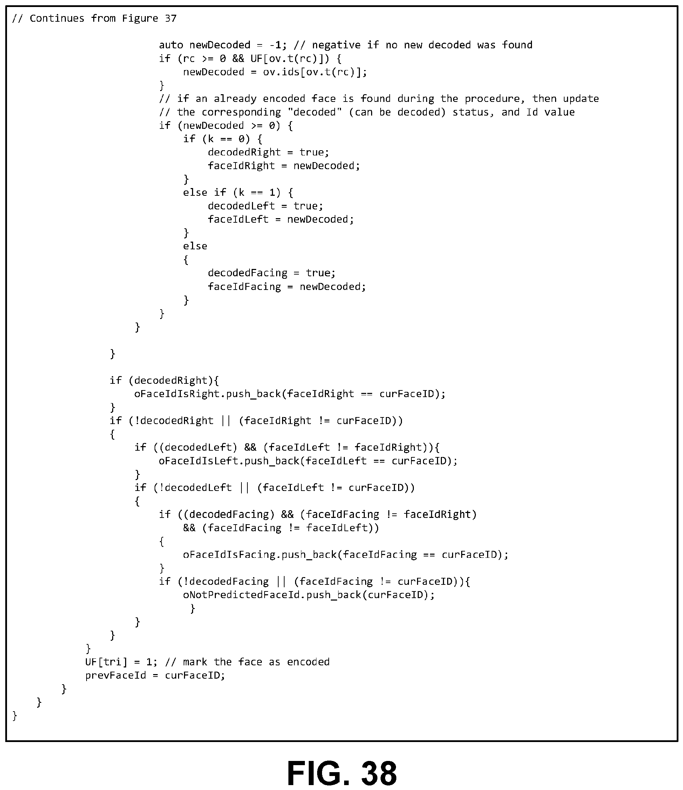

FIG. 38 illustrates a second part of the procedure encodePerFaceAttributes according to an example embodiment.

FIG. 39 illustrates a first part of the procedure decodePerFaceAttributes according to an example embodiment. As illustrated in FIG. 39, the decoding of per-face attributes is performed using a forward iteration over the table processedCorners. (Note that the table processedCorners at the encoder is different from the table processedCorners at the decoder because they may process corners in different orders, e.g. opposite orders.)

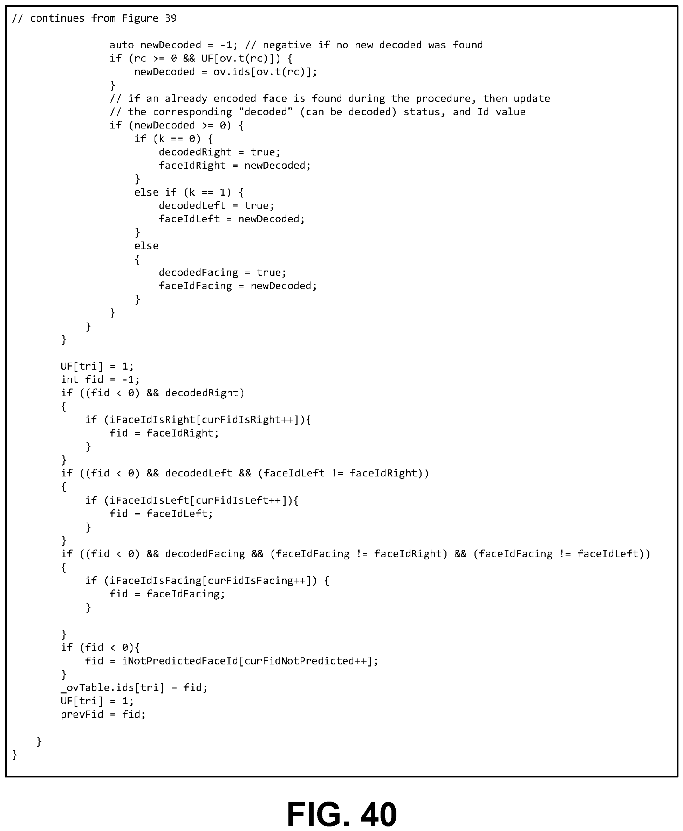

FIG. 40 illustrates a second part of the procedure decodePerFaceAttributes according to an example embodiment.

FIG. 41 illustrates a procedure applylndexDeduplicatePerFan used for per fan deduplications according to some embodiments according to an example embodiment.

FIG. 42 illustrates code used in delta coding of a handles table in a serialize method according to an example embodiment.

FIG. 43 illustrates code used in delta coding of a handles table in an unserialize method according to an example embodiment.

FIG. 44 illustrates modification to a serialize method, particularly to portions related to duplicates, as implemented in some embodiments.

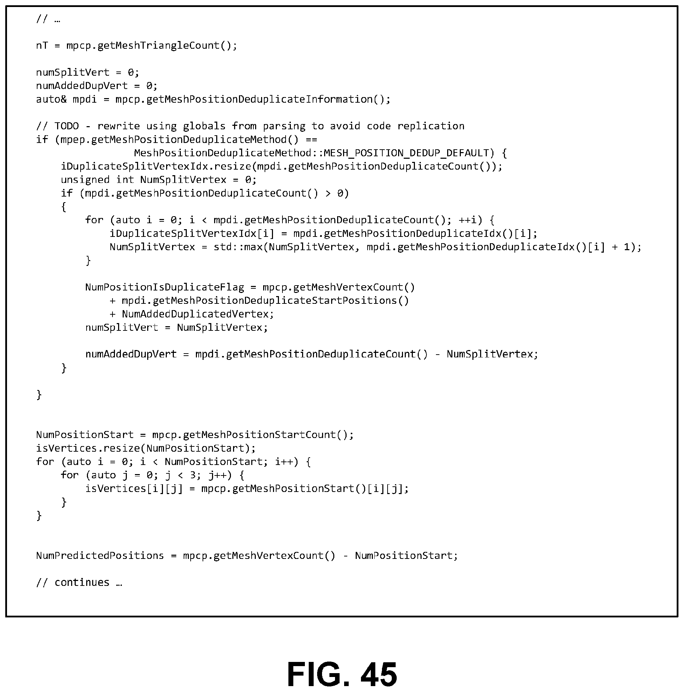

FIG. 45 illustrates modification to an unserialize method, particularly to portions related to duplicates, as implemented in some embodiments.

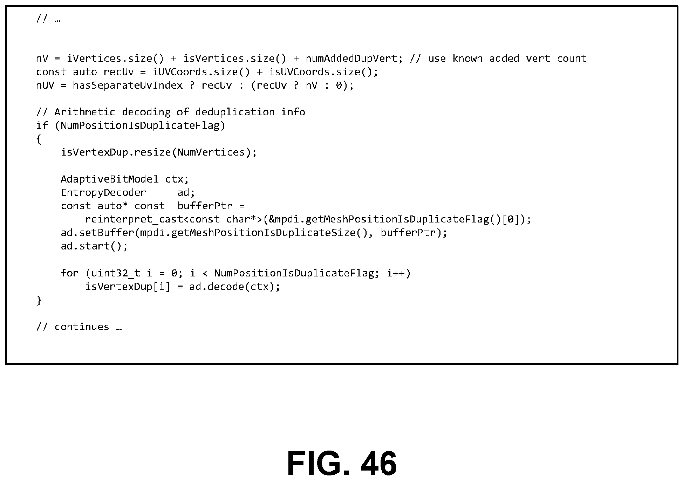

FIG. 46 illustrates modification to an unserialize method, particularly to portions related to arithmetic decoding of duplicates, as implemented in some embodiments.

Example embodiments make it possible to use edgebreaker spiral reversi within the MPEG EB and V3C syntax of V-DMC.

Example embodiments make it possible to use efficient per vertex vertex predictions with edgebreaker spiral reversi and boundary management.

Example embodiments make it possible to use efficient faceld predictions with edgebreaker spiral reversi and boundary management.

Example embodiments of reverse encoding and decoding systems and methods as described herein are believed to have lower complexity implementations than corresponding forward implementations. Such reductions in complexity allow for a greater likelihood of hardware-based codec implementation.

Example embodiments have been found to lead to more efficient encoding (obtained sizes are globally similar but we manage to reach from 1% to 6% gain on C0 conditions (the one with highest mesh density to code) of V-DMC CTCs. Example embodiments have been tested on 290 models from among a large dataset and have been found to perform encoding and decoding about 1% faster than a corresponding forward codec. Example embodiments allow for the possible implementation of valence-driven encoding.

### Example system hardware.

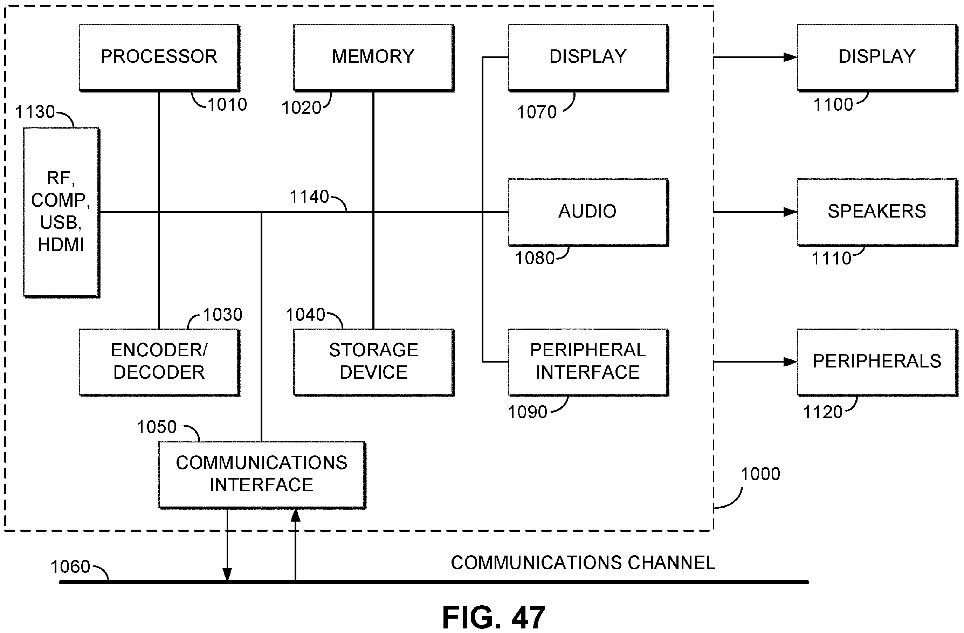

Example embodiments of encoders and/or decoders (collectively coders) configured to implement embodiments described herein may be implemented using systems such as the system of FIG. 47. FIG. 47 is a block diagram of an example of a system in which various aspects and embodiments are implemented. System 1000 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input mesh, the decoded mesh or portions of the decoded mesh, the bitstream, tables, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

### Additional embodiments.

A mesh decoding method according to some embodiments comprises: obtaining from a bitstream a CLERS table representing an edgebreaker encoding of a topology of a triangular mesh; reconstructing the topology of the triangular mesh using a reverse traversal of the CLERS table; creating a first ordered table of corners of the triangular mesh representing an order of corners traversed during the reverse traversal of the CLERS table; obtaining from the bitstream ordered attribute information representing attributes of respective faces or vertices in the triangular mesh; and reconstructing the attributes of the respective faces or vertices using the attribute information and a forward iteration over the first ordered table of corners.

A mesh decoding apparatus according to some embodiments comprises one or more processors configured to perform at least: obtaining from a bitstream a CLERS table representing an edgebreaker encoding of a topology of a triangular mesh; reconstructing the topology of the triangular mesh using a reverse traversal of the CLERS table; creating a first ordered table of corners of the triangular mesh representing an order of corners traversed during the reverse traversal of the CLERS table; obtaining from the bitstream ordered attribute information representing attributes of respective faces or vertices in the triangular mesh; and reconstructing the attributes of the respective faces or vertices using the attribute information and a forward iteration over the first ordered table of corners.

A computer-readable medium according to some embodiments stores instructions for performing the mesh decoding method comprising: obtaining from a bitstream a CLERS table representing an edgebreaker encoding of a topology of a triangular mesh; reconstructing the topology of the triangular mesh using a reverse traversal of the CLERS table; creating a first ordered table of corners of the triangular mesh representing an order of corners traversed during the reverse traversal of the CLERS table; obtaining from the bitstream ordered attribute information representing attributes of respective faces or vertices in the triangular mesh; and reconstructing the attributes of the respective faces or vertices using the attribute information and a forward iteration over the first ordered table of corners.

A mesh encoding method according to some embodiments comprises: using edgebreaker encoding, creating a CLERS table representing a geometry of a triangular mesh; creating a first ordered table of corners of the triangular mesh representing an order of corners traversed during the creation of the CLERS table; creating ordered attribute information representing attributes of respective faces or vertices in the triangular mesh, the ordered attribute information being created using a reverse iteration over the first ordered table of corners; and encoding the CLERS table and the attribute table in a bitstream.

A mesh encoding apparatus according to some embodiments comprises one or more processors configured to perform at least: using edgebreaker encoding, creating a CLERS table representing a geometry of a triangular mesh; creating a first ordered table of corners of the triangular mesh representing an order of corners traversed during the creation of the CLERS table; creating ordered attribute information representing attributes of respective faces or vertices in the triangular mesh, the ordered attribute information being created using a reverse iteration over the first ordered table of corners; and encoding the CLERS table and the attribute table in a bitstream.

A computer-readable medium according to some embodiments stores instructions for performing a mesh encoding method comprising: using edgebreaker encoding, creating a CLERS table representing a geometry of a triangular mesh; creating a first ordered table of corners of the triangular mesh representing an order of corners traversed during the creation of the CLERS table; creating ordered attribute information representing attributes of respective faces or vertices in the triangular mesh, the ordered attribute information being created using a reverse iteration over the first ordered table of corners; and encoding the CLERS table and the attribute table in a bitstream.

In some decoding embodiments, the CLERS table and the ordered attribute information are entropy decoded from the bitstream.

In some encoding embodiments, the CLERS table and the ordered attribute information are entropy encoded in the bitstream.

In some embodiments, the ordered attribute information comprises information (such as residual information) that represents attributes of respective faces.

In some embodiments, the ordered attribute information comprises information (such as residual information) that represents attributes of respective vertices.

In some embodiments, at least a portion of the ordered attribute information represents a difference between an attribute of a current face or vertex and a prediction of the attribute of the current face or vertex.

In some embodiments, the prediction of the attribute of the current face or vertex is based on at least one previously-decoded (or previously-encoded) attribute of a face or vertex.

In some embodiments, the attribute is a vertex position coordinate or a vertex UV coordinate.

In some embodiments, the attribute is a per-face ID.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

The aspects described and contemplated in this disclosure can be implemented in many different forms. While some embodiments are illustrated specifically, other embodiments are contemplated, and the discussion of particular embodiments does not limit the breadth of the implementations. At least one of the aspects generally relates to mesh encoding and decoding, and at least one other aspect generally relates to transmitting a bitstream generated or encoded. These and other aspects can be implemented as a method, an apparatus, a computer readable storage medium having stored thereon instructions for encoding or decoding mesh data according to any of the methods described, and/or a computer readable storage medium having stored thereon a bitstream generated according to any of the methods described.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Also, as used herein, the word "signal" refers to, among other things, indicating something to a corresponding decoder. For example, in certain embodiments the encoder signals a particular one of a plurality of parameters for region-based filter parameter selection for de-artifact filtering. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:

A bitstream or signal that includes one or more of the described syntax elements, or variations thereof.

A bitstream or signal that includes syntax conveying information generated according to any of the embodiments described.

Creating and/or transmitting and/or receiving and/or decoding a bitstream or signal that includes one or more of the described syntax elements, or variations thereof.

Creating and/or transmitting and/or receiving and/or decoding according to any of the embodiments described.

A method, process, apparatus, medium storing instructions, medium storing data, or signal according to any of the embodiments described.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A mesh decoding method comprising:
obtaining from a bitstream a CLERS table representing an edgebreaker encoding of a topology of a triangular mesh;
reconstructing the topology of the triangular mesh using a reverse traversal of the CLERS table;
creating a first ordered table of corners of the triangular mesh representing an order of corners traversed during the reverse traversal of the CLERS table;
obtaining from the bitstream ordered attribute information representing attributes of respective faces or vertices in the triangular mesh; and
reconstructing the attributes of the respective faces or vertices using the attribute information and a forward iteration over the first ordered table of corners.

2. A mesh decoding apparatus comprising one or more processors configured to perform at least:
obtaining from a bitstream a CLERS table representing an edgebreaker encoding of a topology of a triangular mesh;
reconstructing the topology of the triangular mesh using a reverse traversal of the CLERS table;
creating a first ordered table of corners of the triangular mesh representing an order of corners traversed during the reverse traversal of the CLERS table;
obtaining from the bitstream ordered attribute information representing attributes of respective faces or vertices in the triangular mesh; and
reconstructing the attributes of the respective faces or vertices using the attribute information and a forward iteration over the first ordered table of corners.

3. A computer-readable medium storing instructions for performing a mesh decoding method comprising:
obtaining from a bitstream a CLERS table representing an edgebreaker encoding of a topology of a triangular mesh;
reconstructing the topology of the triangular mesh using a reverse traversal of the CLERS table;
creating a first ordered table of corners of the triangular mesh representing an order of corners traversed during the reverse traversal of the CLERS table;
obtaining from the bitstream ordered attribute information representing attributes of respective faces or vertices in the triangular mesh; and
reconstructing the attributes of the respective faces or vertices using the attribute information and a forward iteration over the first ordered table of corners.

4. A mesh encoding method comprising:
using edgebreaker encoding, creating a CLERS table representing a geometry of a triangular mesh;
creating a first ordered table of corners of the triangular mesh representing an order of corners traversed during the creation of the CLERS table;
creating ordered attribute information representing attributes of respective faces or vertices in the triangular mesh, the ordered attribute information being created using a reverse iteration over the first ordered table of corners; and
encoding the CLERS table and the attribute table in a bitstream.

5. A mesh encoding apparatus comprising one or more processors configured to perform at least:
using edgebreaker encoding, creating a CLERS table representing a geometry of a triangular mesh;
creating a first ordered table of corners of the triangular mesh representing an order of corners traversed during the creation of the CLERS table;
creating ordered attribute information representing attributes of respective faces or vertices in the triangular mesh, the ordered attribute information being created using a reverse iteration over the first ordered table of corners; and
encoding the CLERS table and the attribute table in a bitstream.

6. A computer-readable medium storing instructions for performing a mesh encoding method comprising:
using edgebreaker encoding, creating a CLERS table representing a geometry of a triangular mesh;
creating a first ordered table of corners of the triangular mesh representing an order of corners traversed during the creation of the CLERS table;
creating ordered attribute information representing attributes of respective faces or vertices in the triangular mesh, the ordered attribute information being created using a reverse iteration over the first ordered table of corners; and
encoding the CLERS table and the attribute table in a bitstream.

7. The method of claim 1, the apparatus of claim 2, or the computer-readable medium of claim 3, wherein the CLERS table and the ordered attribute information are entropy decoded from the bitstream.

8. The method of claim 4, the apparatus of claim 5, or the computer-readable medium of claim 6, wherein the CLERS table and the ordered attribute information are entropy encoded in the bitstream.

9. The method of claim 1 or 4 or claims 7-8 as they depend from claim 1 or 4, the apparatus of claim 2 or 5 or claims 7-8 as they depend from claim 2 or 5, or the computer-readable medium of claim 3 or 6 or claims 7-8 as they depend from claims 3 or 6, wherein the ordered attribute information represents attributes of respective faces.

10. The method of claim 1 or 4 or claims 7-9 as they depend from claim 1 or 4, the apparatus of claim 2 or 5 or claims 7-9 as they depend from claim 2 or 5, or the computer-readable medium of claim 3 or 6 or claims 7-9 as they depend from claims 3 or 6, wherein the ordered attribute information represents attributes of respective vertices.

11. The method of claim 1 or 4 or claims 7-10 as they depend from claim 1 or 4, the apparatus of claim 2 or 5 or claims 7-10 as they depend from claim 2 or 5, or the computer-readable medium of claim 3 or 6 or claims 7-10 as they depend from claims 3 or 6, wherein at least a portion of the ordered attribute information represents a difference between an attribute of a current face or vertex and a prediction of the attribute of the current face or vertex.

12. The method of 11 as it depends from claim 1 or 4, the apparatus of claim 11 as it depends from claim 2 or 5, or the computer-readable medium of claim 11 as it depends from claims 3 or 6, wherein the prediction of the attribute of the current face or vertex is based on at least one previously-decoded attribute of a face or vertex.

13. The method of claim 1 or 4 or claims 7-12 as they depend from claim 1 or 4, the apparatus of claim 2 or 5 or claims 7-12 as they depend from claim 2 or 5, or the computer-readable medium of claim 3 or 6 or claims 7-12 as they depend from claims 3 or 6, wherein the attribute is a vertex position coordinate.

14. The method of claim 1 or 4 or claims 7-12 as they depend from claim 1 or 4, the apparatus of claim 2 or 5 or claims 7-12 as they depend from claim 2 or 5, or the computer-readable medium of claim 3 or 6 or claims 7-12 as they depend from claims 3 or 6, wherein the attribute is a vertex UV coordinate.

15. The method of claim 1 or 4 or claims 7-13 as they depend from claim 1 or 4, the apparatus of claim 2 or 5 or claims 7-13 as they depend from claim 2 or 5, or the computer-readable medium of claim 3 or 6 or claims 7-13 as they depend from claims 3 or 6, wherein the attribute is a per-face ID.
